(19) Europäisches Patentamt / European Patent Office / Office européen des brevets

(11) **EP 4 560 991 A1**

(12) **EUROPEAN PATENT APPLICATION**
published in accordance with Art. 153(4) EPC

(43) Date of publication:
**28.05.2025 Bulletin 2025/22**

(21) Application number: **23849110.4**

(22) Date of filing: **29.06.2023**

(51) International Patent Classification (IPC):
*H04L 25/02* (2006.01)   *H04L 1/00* (2006.01)
*H04W 24/10* (2009.01)   *H04B 7/06* (2006.01)

(52) Cooperative Patent Classification (CPC):
**H04B 7/06; H04L 1/00; H04L 25/02; H04W 24/10**

(86) International application number:
**PCT/CN2023/103739**

(87) International publication number:
**WO 2024/027400 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.08.2022 CN 202210916569**

(71) Applicant: **Huawei Technologies Co., Ltd.
Shenzhen, Guangdong 518129 (CN)**

(72) Inventors:
• **YE, Chencheng
  Shenzhen, Guangdong 518129 (CN)**
• **YUAN, Yiling
  Shenzhen, Guangdong 518129 (CN)**
• **JIN, Huangping
  Shenzhen, Guangdong 518129 (CN)**
• **HAN, Wei
  Shenzhen, Guangdong 518129 (CN)**

(74) Representative: **Pfenning, Meinig & Partner mbB
Patent- und Rechtsanwälte
Theresienhöhe 11a
80339 München (DE)**

(54) **CHANNEL STATE INFORMATION DETERMINATION METHOD AND RELATED APPARATUS**

(57) This application provides a channel state information determining method and a related apparatus. The method includes: An access network device sends a first reference signal to a terminal device; the access network device receives first measurement information from the terminal device, where the first measurement information is measurement information determined based on the first reference signal; and the access network device receives a second reference signal from the terminal device, and determines channel state information based on the first measurement information and the second reference signal. According to the method in this application, accuracy and precision of channel estimation can be improved.

FIG. 4

EP 4 560 991 A1

**Description**

This application claims priority to Chinese Patent Application No. 202210916569.7, filed with the China National Intellectual Property Administration on August 1, 2022 and entitled "CHANNEL STATE INFORMATION DETERMINING METHOD AND RELATED APPARATUS", which is incorporated herein by reference in its entirety.

**TECHNICAL FIELD**

This application relates to the field of communication technologies, and in particular, to a channel state information determining method and a related apparatus.

**BACKGROUND**

A current communication system has higher requirements on a system capacity, spectral efficiency, and the like. For example, in a 5th generation (fifth generation, 5G) communication system, application of a massive (massive) multiple-input multiple-output (multiple-input multiple-output, MIMO) technology plays a crucial role in improving spectral efficiency of the system. When the MIMO technology is used, a network device needs to perform modulation and coding and signal precoding when sending data to a terminal device. How the network device performs modulation and coding and signal precoding is closely related to a downlink channel state.

In a time division duplex (time division duplex, TDD) system, there is reciprocity between an uplink channel and a downlink channel. A network device may obtain an uplink channel estimation result through uplink sounding reference signal (sounding reference signal, SRS) channel estimation, determine the uplink channel estimation result as a downlink channel estimation result, and perform modulation and coding and signal precoding. Due to a fading characteristic and a time-varying characteristic of a radio channel, in a conventional technology, accuracy and precision of channel estimation cannot be ensured when channel quality of a terminal device is poor. How to improve accuracy and precision of channel estimation in various channel conditions is an urgent problem to be resolved.

**SUMMARY**

This application provides a channel state information determining method and a related apparatus, to improve accuracy and precision of channel estimation.

According to a first aspect, this application provides a channel state information determining method, where the method is applied to an access network device, and the method includes:

sending a first reference signal to a terminal device;
receiving first measurement information from the terminal device, where the first measurement information is determined based on the first reference signal;
receiving a second reference signal from the terminal device; and
determining channel state information based on the first measurement information and the second reference signal.

In this application, the first reference signal may be a CSI-RS, and the second reference signal may be an SRS. Specifically, based on TDD uplink and downlink reciprocity, the access network device uses the first measurement information fed back by the terminal device to assist in SRS estimation, to resolve a problem that accuracy and precision of obtained downlink channel estimation are low because accuracy of uplink channel estimation is low when an SRS signal-to-noise ratio is low, and improve accuracy and precision of channel estimation. Optionally, the terminal device may alternatively send the first measurement information to the access network device in a triggering manner. In other words, the access network device may send first indication information to the terminal device. The first indication information indicates the terminal device to report measurement information, or the first indication information indicates the terminal device to periodically report measurement information. Correspondingly, the terminal device receives the first indication information from the access network device, and then sends the first measurement information to the access network device in response to the first indication information.

In a possible implementation, the first measurement information includes at least one of first information and second information, the first information indicates channel delay domain information, and the second information indicates space domain statistics information of a channel.

In a possible implementation, the channel delay domain information includes first channel delay domain sparsity information, and the space domain statistics information of the channel includes a first space domain statistical covariance matrix of the channel.

In a possible implementation, the first channel delay domain sparsity information includes a first bitmap, the first bitmap indicates a location of a delay path, and a length of the first bitmap is a quantity of resource blocks RBs.

That the space domain statistics information of the channel includes a first space domain statistical covariance matrix of the channel includes:

The space domain statistics information of the channel includes a first space domain statistical covariance matrix of each delay path of the channel.

**In** this implementation, the terminal device may feed back the first space domain statistical covariance matrix of each delay path of the channel to the access network device, to help improve accuracy and precision of channel estimation.

**In** a possible implementation, the method further includes:

sending third information to the terminal device, where the third information is for division into a first-type delay path and a second-type delay path in channel delay domain, and energy of each delay path in the first-type delay path is greater than energy of each delay path in the second-type delay path.

In this implementation, the access network device may include the third information in the first indication information and send the first indication information to the terminal device. The first-type delay path may be understood as a strong delay path, and the second-type delay path may be understood as a weak delay path.

In a possible implementation, the first channel delay domain sparsity information includes a second bitmap, the second bitmap indicates a location of the second-type delay path, and a length of the second bitmap is the quantity of resource blocks RBs.

That the space domain statistics information of the channel includes a first space domain statistical covariance matrix of the channel includes:

The space domain statistics information of the channel includes a first space domain statistical covariance matrix of the second-type delay path of the channel.

In this implementation, the terminal device only feeds back the first space domain statistical covariance matrix of the second-type delay path (that is, a first space domain statistical covariance matrix of the weak delay path), so that accuracy and precision of uplink channel estimation can be improved by using lower feedback overheads of the terminal device, to further improve accuracy and precision of downlink channel estimation determined based on uplink channel estimation.

In a possible implementation, the second information indicates an eigenvalue and an eigenvector matrix that correspond to the first space domain statistical covariance matrix of each delay path or the second-type delay path of the channel.

In this implementation, the terminal device feeds back the first space domain statistical covariance matrix of each delay path to the access network device in a quantized feedback manner (for example, feeding back the eigenvalue and the eigenvector matrix), so that feedback overheads can be reduced.

In a possible implementation, the second information indicates a base combination coefficient matrix corresponding to the first space domain statistical covariance matrix of each delay path or the second-type delay path of the channel.

In this implementation, the terminal device feeds back the first space domain statistical covariance matrix of each delay path to the access network device in a quantized feedback manner (for example, feeding back the base combination coefficient matrix), so that feedback overheads can be reduced.

In a possible implementation, the first reference signal includes a channel state information reference signal CSI-RS, and the second reference signal includes a sounding reference signal SRS.

In a possible implementation, the first measurement information includes the first channel delay domain sparsity information and the first space domain statistical covariance matrix of the channel.

The method further includes:

determining first delay domain channel information based on the second reference signal;
determining second delay domain channel information, where the second delay domain channel information is obtained based on the first channel delay domain sparsity information and the first delay domain channel information; and
determining channel state information based on the first space domain statistical covariance matrix of the channel and the second delay domain channel information.

It should be noted that, in a related technology, when uplink channel estimation is performed in a TDD system, both the channel delay domain sparsity information and the space domain statistical covariance matrix that are used for uplink channel estimation are obtained by the access network device through estimation based on the second reference signal (for example, an SRS signal) from the terminal device. Because a transmit power at which the terminal device sends the second reference signal is lower than a transmit power at which the access network device sends the first reference signal, precision of the channel delay domain sparsity information and the space domain statistical covariance matrix that are obtained by the access network device through estimation based on the second reference signal is lower than precision of the channel delay domain sparsity information and the space domain statistical covariance matrix that are obtained by the terminal device through estimation based on the first reference signal. Therefore, accuracy and precision of channel estimation can be improved in a manner in which the terminal device reports the first channel delay domain sparsity information and the first space domain statistical covariance matrix.

In a possible implementation, the first measurement information includes the first channel delay domain sparsity information.

The method further includes:

determining first delay domain channel information based on the second reference signal;
determining second delay domain channel information, where the second delay domain channel information is obtained based on the first channel delay domain sparsity information and the first delay domain channel information;
determining a second space domain statistical covariance matrix, where the second space domain statistical covariance matrix is obtained based on the second reference signal; and
determining channel state information based on the second space domain statistical covariance matrix and the second delay domain channel information.

It should be noted that, in a related technology, when uplink channel estimation is performed in a TDD system, both the channel delay domain sparsity information and the space domain statistical covariance matrix that are used for uplink channel estimation are obtained by the access network device through estimation based on the second reference signal (for example, an SRS signal) from the terminal device. Because a transmit power at which the terminal device sends the second reference signal is lower than a transmit power at which the access network device sends the first reference signal, precision of the channel delay domain sparsity information and the space domain statistical covariance matrix that are obtained by the access network device through estimation based on the second reference signal is lower than precision of the channel delay domain sparsity information and the space domain statistical covariance matrix that are obtained by the terminal device through estimation based on the first reference signal. Therefore, accuracy and precision of channel estimation can be improved to some extent in a manner in which the terminal device reports the first channel delay domain sparsity information.

In a possible implementation, the first measurement information includes the first space domain statistical covariance matrix of the channel.

The method further includes:

determining first delay domain channel information based on the second reference signal;
determining second channel delay domain sparsity information, where the second channel delay domain sparsity information is obtained based on the second reference signal;
determining second delay domain channel information, where the second delay domain channel information is obtained based on the second channel delay domain sparsity information and the first delay domain channel information; and
determining channel state information based on the first space domain statistical covariance matrix of the channel and the second delay domain channel information.

It should be noted that, in a related technology, when uplink channel estimation is performed in a TDD system, both the channel delay domain sparsity information and the space domain statistical covariance matrix that are used for uplink channel estimation are obtained by the access network device through estimation based on the second reference signal (for example, an SRS signal) from the terminal device. Because a transmit power at which the terminal device sends the second reference signal is lower than a transmit power at which the access network device sends the first reference signal, precision of the channel delay domain sparsity information and the space domain statistical covariance matrix that are obtained by the access network device through estimation based on the second reference signal is lower than precision of the channel delay domain sparsity information and the space domain statistical covariance matrix that are obtained by the terminal device through estimation based on the first reference signal. Therefore, accuracy and precision of channel estimation can be improved to some extent in a manner in which the terminal device reports the first space domain statistical covariance matrix.

In a possible implementation, the first channel delay domain sparsity information is channel delay domain sparsity information at an RB granularity.

The determining second delay domain channel information further includes:

determining channel delay domain sparsity information at a resource element RE granularity based on the channel delay domain sparsity information at the RB granularity; and

determining the second delay domain channel information based on the channel delay domain sparsity information at the RE granularity and the first delay domain channel information.

According to a second aspect, this application provides a channel state information determining method, where the method is applied to a terminal device, and the method includes:

receiving a first reference signal from an access network device;
determining first measurement information based on the first reference signal;
sending the first measurement information to the access network device; and
sending a second reference signal to the access network device, where the first measurement information and the second reference signal are used to determine channel state information.

In a possible implementation, the first measurement information includes at least one of first information and second information, the first information indicates channel delay domain information, and the second information indicates space domain statistics information of a channel.

In a possible implementation, the channel delay domain information includes first channel delay domain sparsity information, and the space domain statistics information of the channel includes a first space domain statistical covariance matrix of the channel.

In a possible implementation, the first channel delay domain sparsity information includes a first bitmap, the first bitmap indicates a location of a delay path, and a length of the first bitmap is a quantity of RBs.

That the space domain statistics information of the channel includes a first space domain statistical covariance matrix of the channel includes:

The space domain statistics information of the channel includes a first space domain statistical covariance matrix of each delay path of the channel.

In a possible implementation, the method further includes:

receiving third information from the access network device, where the third information is for division into a first-type delay path and a second-type delay path in channel delay domain, and energy of each delay path in the first-type delay path is greater than energy of each delay path in the second-type delay path.

That the space domain statistics information of the channel includes a first space domain statistical covariance matrix of the channel includes:

The space domain statistics information of the channel includes a first space domain statistical covariance matrix of the second-type delay path of the channel.

In a possible implementation, the first channel delay domain sparsity information includes a second bitmap, the second bitmap indicates a location of the second-type delay path, and a length of the second bitmap is the quantity of resource blocks RBs.

That the space domain statistics information of the channel includes a first space domain statistical covariance matrix of the channel includes:

The space domain statistics information of the channel includes a first space domain statistical covariance matrix of the second-type delay path of the channel.

In a possible implementation, the second information indicates an eigenvalue and an eigenvector matrix that correspond to the first space domain statistical covariance matrix of each delay path or the second-type delay path of the channel.

In a possible implementation, the second information indicates a base combination coefficient matrix corresponding to the first space domain statistical covariance matrix of each delay path or the second-type delay path of the channel.

In a possible implementation, the first reference signal includes a channel state information reference signal CSI-RS, and the second reference signal includes a sounding reference signal SRS.

According to a third aspect, this application provides a communication apparatus, where the apparatus is an access network device, and the apparatus includes:

a transceiver unit, configured to send a first reference signal to a terminal device, where
the transceiver unit is further configured to receive first measurement information from the terminal device, where the first measurement information is determined based on the first reference signal; and
the transceiver unit is further configured to receive a second reference signal from the terminal device; and
a processing unit, configured to determine channel state information based on the first measurement information and the second reference signal.

In a possible implementation, the first measurement information includes at least one of first information and second information, the first information indicates channel delay domain information, and the second information indicates space domain statistics information of a channel.

In a possible implementation, the channel delay domain information includes first channel delay domain sparsity information, and the space domain statistics information of the channel includes a first space domain statistical covariance matrix of the channel.

In a possible implementation, the first channel delay domain sparsity information includes a first bitmap, the first bitmap indicates a location of a delay path, and a length of the first bitmap is a quantity of RBs.

That the space domain statistics information of the channel includes a first space domain statistical covariance matrix of the channel includes:

The space domain statistics information of the channel includes a first space domain statistical covariance matrix of each delay path of the channel.

In a possible implementation, the transceiver unit is further configured to:

send third information to the terminal device, where the third information is for division into a first-type delay path and a second-type delay path in channel delay domain, and energy of each delay path in the first-type delay path is greater than energy of each delay path in the second-type delay path.

In a possible implementation, the first channel delay domain sparsity information includes a second bitmap, the second bitmap indicates a location of the second-type delay path, and a length of the second bitmap is the quantity of resource blocks RBs.

That the space domain statistics information of the channel includes a first space domain statistical covariance matrix of the channel includes:

The space domain statistics information of the channel includes a first space domain statistical covariance matrix of the second-type delay path of the channel.

In a possible implementation, the second information indicates an eigenvalue and an eigenvector matrix that correspond to the first space domain statistical covariance matrix of each delay path or the second-type delay path of the channel.

In a possible implementation, the second information indicates a base combination coefficient matrix corresponding to the first space domain statistical covariance matrix of each delay path or the second-type delay path of the channel.

In a possible implementation, the first reference signal includes a channel state information reference signal CSI-RS, and the second reference signal includes a sounding reference signal SRS.

In a possible implementation, the first measurement information includes the first channel delay domain sparsity information and the first space domain statistical covariance matrix of the channel.

The processing unit is further configured to determine first delay domain channel information based on the second reference signal.

The processing unit is further configured to determine second delay domain channel information, where the second delay domain channel information is obtained based on the first channel delay domain sparsity information and the first delay domain channel information.

The processing unit is further configured to determine channel state information based on the first space domain statistical covariance matrix of the channel and the second delay domain channel information.

In a possible implementation, the first measurement information includes the first channel delay domain sparsity information.

The processing unit is further configured to determine first delay domain channel information based on the second reference signal.

The processing unit is further configured to determine second delay domain channel information, where the second delay domain channel information is obtained based on the first channel delay domain sparsity information and the first delay domain channel information.

The processing unit is further configured to determine a second space domain statistical covariance matrix, where the second space domain statistical covariance matrix is obtained based on the second reference signal.

The processing unit is further configured to determine channel state information based on the second space domain statistical covariance matrix and the second delay domain channel information.

In a possible implementation, the first measurement information includes the first space domain statistical covariance matrix of the channel.

The processing unit is further configured to determine first delay domain channel information based on the second reference signal.

The processing unit is further configured to determine second channel delay domain sparsity information, where the second channel delay domain sparsity information is obtained based on the second reference signal.

The processing unit is further configured to determine second delay domain channel information, where the second delay domain channel information is obtained based on the second channel delay domain sparsity information and the first delay domain channel information.

The processing unit is further configured to determine channel state information based on the first space domain statistical covariance matrix of the channel and the second delay domain channel information.

In a possible implementation, the first channel delay domain sparsity information is channel delay domain sparsity information at an RB granularity.

The processing unit is further configured to:

determine channel delay domain sparsity information at a resource element RE granularity based on the channel delay domain sparsity information at the RB granularity; and
determine the second delay domain channel information based on the channel delay domain sparsity information at the RE granularity and the first delay domain channel information.

According to a fourth aspect, this application provides a communication apparatus, where the apparatus is a terminal device, and the apparatus includes:

a transceiver unit, configured to receive a first reference signal from an access network device; and
a processing unit, configured to determine first measurement information based on the first reference signal, where the transceiver unit is further configured to send the first measurement information to the access network device; and the transceiver unit is further configured to send a second reference signal to the access network device, where the first measurement information and the second reference signal are used to determine channel state information.

In a possible implementation, the first measurement information includes at least one of first information and second information, the first information indicates channel delay domain information, and the second information indicates space domain statistics information of a channel.

In a possible implementation, the channel delay domain information includes first channel delay domain sparsity information, and the space domain statistics information of the channel includes a first space domain statistical covariance matrix of the channel.

In a possible implementation, the first channel delay domain sparsity information includes a first bitmap, the first bitmap indicates a location of a delay path, and a length of the first bitmap is a quantity of RBs.

That the space domain statistics information of the channel includes a first space domain statistical covariance matrix of the channel includes:

The space domain statistics information of the channel includes a first space domain statistical covariance matrix of each delay path of the channel.

In a possible implementation, the transceiver unit is further configured to:

receive third information from the access network device, where the third information is for division into a first-type delay path and a second-type delay path in channel delay domain, and energy of each delay path in the first-type delay path is greater than energy of each delay path in the second-type delay path.

In a possible implementation, the first channel delay domain sparsity information includes a second bitmap, the second bitmap indicates a location of the second-type delay path, and a length of the second bitmap is the quantity of resource blocks RBs.

That the space domain statistics information of the channel includes a first space domain statistical covariance matrix of the channel includes:

The space domain statistics information of the channel includes a first space domain statistical covariance matrix of the second-type delay path of the channel.

In a possible implementation, the second information indicates an eigenvalue and an eigenvector matrix that correspond to the first space domain statistical covariance matrix of each delay path or the second-type delay path of the channel.

In a possible implementation, the second information indicates a base combination coefficient matrix corresponding to the first space domain statistical covariance matrix of each delay path or the second-type delay path of the channel.

In a possible implementation, the first reference signal includes a channel state information reference signal CSI-RS, and the second reference signal includes a sounding reference signal SRS.

According to a fifth aspect, this application provides a communication apparatus. The communication apparatus includes a processor, and the processor is configured to implement the method according to any one of the first aspect by using a logic circuit or by executing instructions.

In a possible implementation, the apparatus further includes a transceiver, configured to send and receive signals.

In a possible implementation, the processor is coupled to a memory, and the memory stores the foregoing instructions.

In a possible implementation, the apparatus further includes a memory, configured to store the foregoing instructions. Optionally, the memory and the processor are integrated together. Alternatively, the memory and the processor are disposed separately.

According to a sixth aspect, this application provides a communication apparatus. The communication apparatus includes a processor, and the processor is configured to implement the method according to any one of the second aspect by using a logic circuit or by executing instructions.

In a possible implementation, the apparatus further includes a transceiver, configured to send and receive signals.

In a possible implementation, the processor is coupled to a memory, and the memory stores the foregoing instructions.

In a possible implementation, the apparatus further includes a memory, configured to store the foregoing instructions. Optionally, the memory and the processor are integrated together. Alternatively, the memory and the processor are disposed separately.

According to a seventh aspect, this application provides a computer-readable storage medium. The storage medium stores a computer program or instructions, and when the computer program or the instructions are executed by a computer, the method according to any one of the first aspect and the second aspect is implemented.

According to an eighth aspect, this application provides a computer program product including instructions. The computer program product includes a computer program or the instructions, and when the computer program or the instructions are run on a computer, the method according to any one of the first aspect and the second aspect is implemented.

According to a ninth aspect, a communication system is provided. The communication system includes the access network device according to the third aspect and the terminal device according to the fourth aspect.

For beneficial effects of the technical solutions provided in the second aspect to the ninth aspect of this application, refer to the beneficial effects of the technical solutions provided in the first aspect. Details are not described herein again.

## BRIEF DESCRIPTION OF DRAWINGS

FIG. 1 is a diagram of a structure of a communication system according to an embodiment of this application;
FIG. 2 is a schematic flowchart of obtaining downlink channel CSI based on an SRS according to an embodiment of this application;
FIG. 3 is a schematic flowchart of obtaining downlink channel CSI based on a UE feedback according to an embodiment of this application;
FIG. 4 is an interaction diagram of a channel state information determining method according to an embodiment of this application;
FIG. 5 is a diagram of a structure of a communication apparatus according to an embodiment of this application;
FIG. 6 is a diagram of a structure of another communication apparatus according to an embodiment of this application;
FIG. 7 is a diagram of a structure of another communication apparatus according to an embodiment of this application; and
FIG. 8 is a diagram of a structure of another communication apparatus according to an embodiment of this application.

## DESCRIPTION OF EMBODIMENTS

The following clearly describes the technical solutions in embodiments of this application with reference to the accompanying drawings in embodiments of this application.

In descriptions of this application, unless otherwise specified, "/" means "or". For example, A/B may mean A or B. In this specification, "and/or" describes only an association relationship between associated objects and represents that three relationships may exist. For example, A and/or B may represent the following three cases: Only A exists, both A and B exist, and only B exists. In addition, "at least one" means one or more, and "a plurality of" means two or more. Words such as "first" and "second" do not limit a quantity and an execution sequence, and the words such as "first" and "second" do not indicate a definite difference.

In this application, the word such as "example" or "for example" is used to represent giving an example, an illustration, or a description. Any embodiment or design solution described as an "example" or "for example" in this application should not be explained as being more preferred or having more advantages than another embodiment or design solution. Exactly, use of the word such as "example" or "for example" is intended to present a related concept in a specific manner.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system such as a new radio (new radio, NR) system, a system evolved after 5G such as a 6th generation (6th generation, 6G) system, and a wireless local area network (Wireless Local Area Network, WLAN). This is not limited herein.

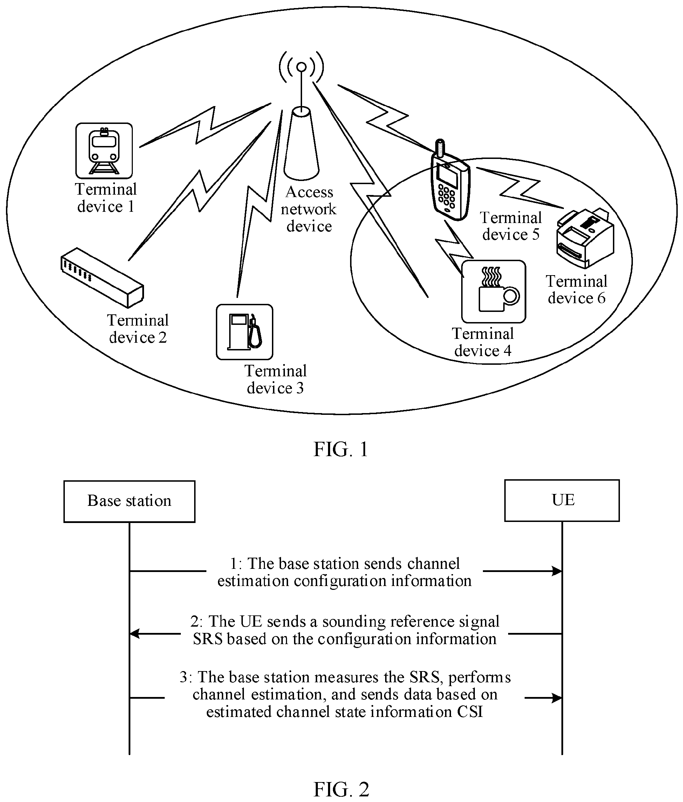

For example, FIG. 1 is a diagram of a structure a communication system according to an embodiment of this application. As shown in FIG. 1, an access network device and a terminal device 1 to a terminal device 6 form a communication system. In the communication system, the terminal device 1 to the terminal device 6 may send uplink information to the access network device, and the access network device may alternatively send downlink information to the terminal device 1 to the terminal device 6. In addition, the terminal device 4 to the terminal device 6 may alternatively form a communication system. In the communication system, the access network device may send downlink information to the terminal device 1, the terminal device 2, the terminal device 3, the terminal device 5, and the like. The terminal device 5 may alternatively send downlink information to the terminal device 4 and the terminal device 6. The terminal device 4 and the terminal device 6 may alternatively send uplink information to the access network device via the terminal device 5.

The terminal device in embodiments of this application may be a device having a wireless transceiver function, and may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a communication device carried on a high-altitude aircraft, a wearable device, an unmanned aerial vehicle, a robot, a smart point of sale (point of sale, POS) machine, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus, for example, a chip system, that can support the terminal device in implementing the function. The apparatus may be installed in the terminal device, or may be used together with the terminal device. In embodiments of this application, the chip system may include a chip, or may include a chip and another discrete component.

The access network device in embodiments of this application may be a device having a wireless transceiver function, and is configured to communicate with the terminal device, or may be a device that connects the terminal device to a wireless network. The network device may be a node in a radio access network, and may also be referred to as a base station, or may be referred to as a radio access network (radio access network, RAN) node (or device). The network device may be an evolved base station (evolved NodeB, eNB or eNodeB) in LTE, a next generation NodeB (next generation NodeB, gNB) in a 5G network or a base station in a future evolved public land mobile network (public land mobile network, PLMN), a broadband network gateway (broadband network gateway, BNG), an aggregation switch or a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device for implementing a base station function in a communication system evolved after 5G, an access point (access point, AP) in a Wi-Fi system, a transmitting and receiving point (transmitting and receiving point, TRP), a transmitting point (transmitting point, TP), a mobile switching center, and a device that functions as a base station in device-to-device (Device-to-Device, D2D), vehicle-to-everything (vehicle-to-everything, V2X), and machine-to-machine (machine-to-machine, M2M) communication, and may further include a central unit (central unit, CU) and a distributed unit (distributed unit, DU) in a cloud radio access network (cloud radio access network, C-RAN) system, and a network device in a non-terrestrial network (non-terrestrial network, NTN) communication system, that is, may be deployed on a high-altitude platform or a satellite. This is not specifically limited in embodiments of this application.

The access network device may communicate and interact with a core network device, to provide a communication service for the terminal device. The core network device is, for example, a device in a 5G network core network (core network, CN). As a bearer network, the core network provides an interface to a data network, provides communication connection, authentication, management, and policy control for a terminal, bearers a data service, and the like.

In embodiments of this application, an apparatus configured to implement a function of the access network device may be an access network device, or may be an apparatus, for example, a chip system, that can support the access network device in implementing the function. The apparatus may be installed in the access network device, or may be used together with the access network device.

To facilitate understanding of related content in embodiments of this application, the following describes some knowledge required in the solutions in this application. It should be noted that these explanations are intended to facilitate understanding of embodiments of this application, but should not be considered as a limitation on the protection scope claimed in this application.

1. Uplink channel estimation

Uplink channel estimation refers to a process in which an access network device estimates an uplink channel from a sounding reference signal (sounding reference signal, SRS) or another reference signal that is received from a terminal device, where the uplink channel is a channel from the terminal device to the access network device.

2. Least square (least square, LS) estimation

Least square estimation, also referred to as minimum square estimation, is an estimation method of minimizing a sum of squares of errors between a to-be-measured value and a measured value. This method does not consider a statistical characteristic of the to-be-measured value.

For example, for Y=XH+N, where Y is a received signal, X is a sent signal, H is a channel matrix, and N is noise. When the received signal Y and the sent signal X are known, an expression for LS estimation of the channel H is $H_{LS} = X^{-1}Y$.

3. Linear minimum mean square error (linear minimum mean square error, LMMSE) estimation

Minimum mean square error estimation is an estimation method of minimizing an average value of sums of squares of errors between a to-be-measured value and a statistical quantity. A statistical characteristic of the to-be-measured value needs to be used as prior information. The linear minimum mean square error estimation is linear approximation of minimum mean square error (minimum mean square error, MMSE) estimation.

For example, for Y=XH+N, where Y is a received signal, X is a sent signal, H is a channel matrix, and N is noise. When the received signal Y and the sent signal X are known, an expression for LMMSE estimation of the channel H is $H_{LMMSE} = R_{HH}X^H(XR_{HH}X^H + \sigma^2 I)^{-1}Y$, where $R_{HH} = E[HH^H]$ is a covariance matrix of H, $\sigma$ is a variance of the noise, and I is an identity matrix. In addition, after substituting an expression $H_{LS} = X^{-1}Y$ for LS estimation into the formula, the formula may be converted into $H_{LMMSE} = R_{HH}(R_{HH} + \sigma^2 I)^{-1}H_{LS}$.

4. Delay domain, beam domain, frequency domain, and space domain

A complete radio baseband channel is a function of space and time. In time domain, a channel may be represented as a channel impulse response corresponding to a different delay (delay). Dimensions corresponding to a delay and space are delay domain and space domain. Information in delay domain after discrete Fourier transform (discrete Fourier transform, DFT) is information in frequency domain, and information in space domain after DFT transform is information in beam domain.

5. Delay path

The delay path is a specific delay sample point, and there is a channel impulse response corresponding to the delay, in other words, there is a signal path whose delay is close to that of the delay sample point.

6. Delay power spectrum information of a channel and beam power spectrum information of the channel

A delay power spectrum of the channel is a curve formed by using a delay as a horizontal coordinate and using total energy of the channel corresponding to the delay as a vertical coordinate. A beam power spectrum of the channel is a curve formed by using a beam angle as a horizontal coordinate and using total energy of the channel at the beam angle as a vertical coordinate.

7. Channel delay domain sparsity information and space domain statistical covariance matrix

The channel delay domain sparsity information represents which delay sample points have a channel path (namely, delay path), in other words, which delay sample points have a channel impulse response.

The space domain statistical covariance matrix is obtained by performing time statistics on a space domain instantaneous covariance matrix, and the space domain instantaneous covariance matrix is equal to an instantaneous channel matrix multiplied by a conjugate matrix of the instantaneous channel matrix.

8. Base combination coefficient matrix

The base combination coefficient matrix is a combination coefficient matrix C obtained by decomposing a covariance matrix R into $R = FCF^H$, where F is a base matrix known by an access network device. The base matrix may be a base matrix predefined in a protocol, or a base matrix determined by the access network device and configured for a terminal device, or a base matrix negotiated between the access network device and a terminal device. The base combination coefficient matrix is used to restore the covariance matrix R by using $FCF^H$.

9. Eigenvalue and eigenvector matrix

The eigenvalue and the eigenvector matrix refer to forms obtained by performing singular value decomposition $R = UCU^H$ on a covariance matrix R, where C is a diagonal matrix formed by using eigenvalues, U is an eigenvector matrix, and each column vector in U is an eigenvector.

10. Discrete Fourier transform base

Discrete Fourier transform means that Fourier transform is in a discrete form in both time domain and frequency domain, and transforming sampling of a time domain signal into sampling of a frequency domain signal. The discrete Fourier transform base is a base of discrete Fourier transform space, that is, a column vector of a matrix used to perform discrete Fourier transform.

11. Resource block (resource block, RB) and resource element (resource element, RE)

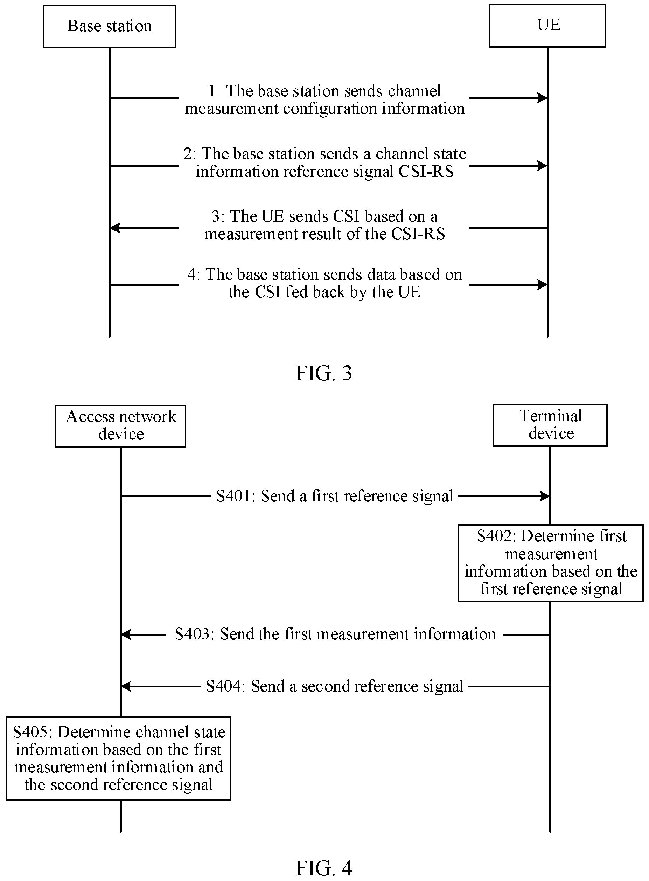

The RE is a physical layer resource at a minimum granularity, and is one subcarrier (subcarrier) in frequency domain and one orthogonal frequency division multiplexing (orthogonal frequency division multiplexing, OFDM) symbol in time domain. Descriptions of the RE in this application mainly refer to a frequency domain dimension. For example, a quantity of REs is a quantity of REs in different frequency domains corresponding to a same OFDM symbol.
The RB is a basic unit of channel resource allocation in frequency domain. Usually, one RB includes 12 subcarriers in frequency domain, and is usually one slot in time domain. Descriptions of the RB in this application mainly refer to a frequency domain dimension. For example, a quantity of RBs is a quantity of RBs in different frequency domains corresponding to a same slot.
It should be noted that in a TDD system, because an uplink channel and a downlink channel use a same frequency band, reciprocity exists. A base station may obtain downlink channel estimation through uplink SRS channel estimation by using reciprocity between uplink and downlink channels, and then perform precoding on downlink data based on channel state information (channel state information, CSI) determined based on the downlink channel estimation. A basic flowchart of performing SRS estimation by the base station and UE is shown in FIG. 2. 1: The base station sends channel estimation configuration information, to notify the UE of time and a behavior of measuring an SRS by the base station. 2: The UE sends the SRS to the base station based on the configuration information, where the SRS is for channel estimation. 3: The base station measures the SRS, performs channel estimation, and sends data to the UE based on estimated CSI. In other words, the base station may perform uplink channel estimation/restoration based on the SRS, to obtain CSI of the uplink channel, and determine the CSI of the uplink channel as CSI of the downlink channel by using the reciprocity between the uplink and downlink channels in the TDD system. Therefore, the base station may subsequently send data based on the CSI of the downlink channel. For example, the base station may determine, based on a channel estimated by using the CSI of the downlink channel, precoding used when the data is sent to the UE.
In addition, the base station may not use the reciprocity between the uplink and downlink channels. Instead, a precoding matrix indicator (precoding matrix indicator, PMI) of the CSI of the downlink channel is fed back to the base station via the UE. A basic flowchart of performing CSI measurement by the base station and the UE is shown in FIG. 3. 1: The base station sends channel measurement configuration information to the UE, to configure time and a behavior of performing channel measurement by the UE. 2: The base station sends a channel state information reference signal (channel state information reference signal, CSI-RS) to the UE. 3: The UE sends CSI based on a measurement result of the CSI-RS, in other words, the UE measures the received CSI-RS, obtains the CSI through calculation, and feeds back the CSI to the base station, where the CSI includes the PMI. 4: The base station sends data based on the CSI fed back by the UE. Specifically, the base station may determine, based on the PMI in the CSI fed back by the UE, precoding used when the data is sent to the UE.

Usually, for UE with a higher SRS signal-to-noise ratio, a manner (refer to the procedure shown in FIG. 2) in which a base station obtains downlink channel estimation through SRS channel estimation also has high precision. For example, the base station first performs LS estimation based on a sent SRS signal and a received SRS signal, to obtain an estimated channel $\hat{H} = X^{-1}Y$, where $X$ is the sent SRS signal, and $Y$ is the received SRS signal.

However, for UE with a lower SRS signal-to-noise ratio, uplink channel estimation performed based on an SRS has low accuracy. Consequently, downlink channel estimation also has low accuracy. In addition, if a terminal device directly feeds back a downlink channel estimation result determined based on a CSI-RS to an access network device as a downlink channel estimation value (refer to the procedure shown in FIG. 3), because the UE needs to quantize the downlink channel estimation value and then feed back a quantized downlink channel estimation value, precision of the downlink channel estimation value that is fed back by the terminal device and that is received by the access network device is affected due to a feedback quantization loss.

Based on this, this application provides a channel state information determining method and a related apparatus, to improve accuracy and precision of uplink channel estimation, and further improve accuracy and precision of downlink channel estimation determined based on uplink channel estimation.

The following describes in detail the channel state information determining method and a communication apparatus that are provided in this application.

FIG. 4 is an interaction diagram of a channel state information determining method according to an embodiment of this application. As shown in FIG. 4, the channel state information determining method includes the following steps S401 to S405. The method shown in FIG. 4 may be performed by a terminal device and an access network device. Alternatively, the method shown in FIG. 4 may be performed by a chip in a terminal device and a chip in an access network device. It should be noted that FIG. 4 is a schematic flowchart of a method embodiment of this application, and shows detailed communication steps or operations of the method. However, these steps or operations are merely examples. Variants of various operations in FIG. 4 or other operations may be further performed in embodiments of this application. In addition, the steps in FIG. 4 may be performed based on an order different from that presented in FIG. 4, and not all operations in FIG. 4 may need to be performed. In FIG. 4, an example in which the method is performed by the terminal device and the access network device is used for description.

S401: The access network device sends a first reference signal to the terminal device. Correspondingly, the terminal device receives the first reference signal from the access network device.

The first reference signal may be a CSI-RS, a cell-specific reference signal (cell-specific reference signal, CRS), a demodulation reference signal (demodulation reference signal, DMRS), a synchronization signal and PBCH block (synchronization signal and PBCH block, SSB), or the like, or may be a reference signal of another type. This is not limited herein.

Optionally, before S401, the access network device may send first configuration information to the terminal device, where the first configuration information is used to configure information related to the first reference signal, for example, configure a resource on which the terminal device measures first reference signal and how to report a measurement result.

S402: The terminal device determines first measurement information based on the first reference signal.

After receiving the first reference signal from the access network device, the terminal device performs channel measurement and calculation on the first reference signal, to obtain the first measurement information.

S403: The terminal device sends the first measurement information to the access network device. Correspondingly, the access network device receives the first measurement information from the terminal device.

Optionally, the first configuration information may be used to configure the terminal device to send the first measurement information to the access network device in an aperiodic manner or a periodic manner. It may be understood that the access network device may periodically send the first reference signal, and a sending periodicity of the first measurement information may be greater than or equal to a sending periodicity of the first reference signal.

The first measurement information includes at least one of first information and second information. In other words, the first measurement information includes the first information, or the first measurement information includes the second information, or the first measurement information includes the first information and the second information.

The first information indicates channel delay domain information, and the second information indicates space domain statistics information of a channel.

It should be noted that in this application, "indicate" may include "directly indicate" and "indirectly indicate". When a piece of indication information indicates A, the indication information may directly indicate A or indirectly indicate A, but it does not indicate that the indication information definitely carries A.

Information indicated by indication information is referred to as to-be-indicated information. In a specific implementation process, there are a plurality of manners of indicating the to-be-indicated information, for example, but not limited to, the following manners: The to-be-indicated information, for example, the to-be-indicated information or an index of the to-be-indicated information, is directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, a common part of all pieces of information may further be identified and indicated in a unified manner, to reduce indication overheads caused by separately indicating same information. For example, a person skilled in the art should understand that a precoding matrix includes precoding vectors, and the precoding vectors in the precoding matrix may have a same part in terms of composition or other attributes.

In addition, specific indication manners may alternatively be various existing indication manners, for example, but not limited to, the foregoing indication manners and various combinations thereof. For specific details of the various indication manners, refer to a conventional technology. Details are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of the to-be-indicated information.

The to-be-indicated information may be sent as a whole, or may be divided into a plurality of pieces of sub-information and sent separately. In addition, sending periodicities and/or sending occasions of these pieces of sub-information may be the same or different. A specific sending method is not limited in this application. The sending periodicities and/or the sending occasions of these pieces of sub-information may be predefined, for example, predefined according to a protocol, or may be configured by a transmitting end device by sending configuration information to a receiving end device. The configuration information may include, for example, but not limited to, one or a combination of at least two of radio resource control signaling, media access control (media access control, MAC) layer signaling, and physical layer signaling. The radio resource control signaling includes, for example, radio resource control (radio resource control, RRC) signaling. The MAC layer signaling includes, for example, a MAC control element (CE). The physical layer signaling includes, for example, downlink control information (downlink control information, DCI).

For example, the channel delay domain information may be channel delay domain sparsity information, and the space domain statistics information of the channel may be a space domain statistical covariance matrix of the channel. It should be noted that, when the channel has a plurality of delay paths, the space domain statistical covariance matrix of the channel may be understood as including a space domain statistical covariance matrix corresponding to each delay path in the plurality of delay paths, or the space domain statistical covariance matrix of the channel may be understood as including space domain statistical covariance matrices corresponding to some delay paths in the plurality of delay paths. The two understandings are described in detail below.

Optionally, the channel delay domain information may alternatively be delay power spectrum information of the channel, and the space domain statistics information of the channel may alternatively be beam power spectrum information or the like of the channel. This is not limited herein.

It may be understood that the terminal device may sequentially select a delay path in descending order of energy based on the delay power spectrum information, until total energy of the selected delay path reaches a specific threshold, to indicate channel delay domain sparsity information of a location of the selected delay path. Alternatively, the terminal device selects, on each delay path based on the delay power spectrum information, a delay path whose energy is greater than a specific threshold, to indicate channel delay domain sparsity information of a location of the selected delay path.

It may be understood that the terminal device may obtain energy of each beam sample point based on the beam power spectrum information, and use the energy as a diagonal element to construct a diagonal matrix, that is, an approximate value of the space domain statistical covariance matrix.

For ease of understanding, the following embodiment of this application is mainly described by using an example in which the channel delay domain information is first channel delay domain sparsity information, and the space domain statistics information of the channel is a first space domain statistical covariance matrix of the channel.

The first information indicates the channel delay domain information. In a possible implementation, the first channel delay domain sparsity information is represented by using indication information of a first bitmap. A length of the first bitmap is a quantity of RBs. The quantity of RBs in this application is a quantity of RBs scheduled and allocated by the access network device to the terminal device. A bit location of a first value in the first bitmap represents a location of a delay path. The first value may be specifically 1, or may be 0. This is not limited herein. For example, the first bitmap may be represented as S, where $S=(S_i)$, $i=1, 2, ...,$ or $N_{RB}$, $S_i=\{0, 1\}$, and $N_{RB}$ represents the quantity of RBs. For ease of understanding, the following mainly uses an example in which the first value being 1 indicates the location of the delay path for illustration. It may be understood that, because information in delay domain after DFT transform is information in frequency domain, a quantity of delay sample points in delay domain is equal to a quantity of RBs in frequency domain.

For example, assuming that the first bitmap is 1000100110, locations of delay paths are respectively a 1st delay sample point, a 5th delay sample point, an 8th delay sample point, and a 9th delay sample point. In the following descriptions, a delay path corresponding to the 1st delay sample point may be described as a delay path 1, a delay path corresponding to the 5th delay sample point may be described as a delay path 5, a delay path corresponding to the 8th delay sample point may be described as a delay path 8, and a delay path corresponding to the 9th delay sample point may be described as a delay path 9.

In another possible implementation, the first channel delay domain sparsity information indicates an index of each delay path of the channel. For example, the first channel delay domain sparsity information may be represented by using a delay path index. For example, the first channel delay domain sparsity information may indicate a delay path index 1, a delay path index 5, a delay path index 8, and a delay path index 9. Therefore, a corresponding delay path may be determined based on the delay path index. For example, a corresponding delay path 1 may be determined based on the delay path index 1, a corresponding delay path 5 may be determined based on the delay path index 5, a corresponding delay path 8 may be determined based on the delay path index 8, and a corresponding delay path 9 may be determined based on the delay path index 9.

In still another possible implementation, the first channel delay domain sparsity information indicates a combination quantity of delay paths. For example, the first channel delay domain sparsity information may be represented by using the combination quantity of delay paths. For example, if a channel with 10 frequencies includes four delay paths, there are a total of $C_{10}^{4} = 210$ combination forms of locations of the delay paths. Therefore, a corresponding delay path may be determined based on a quantity of delay paths and a sequence number of a combination of the locations of the delay paths. For example, it may be agreed that when the quantity of delay paths is 4, an 89th combination of the locations of the delay paths is that the delay paths are at 1st, 5th, 8th, and 9th delay sample points.

The second information indicates the space domain statistics information of the channel. In a possible implementation, the second information indicates a first space domain statistical covariance matrix of each delay path of the channel in a manner of indicating an eigenvalue and an eigenvector matrix. In other words, the access network device may recover or restore the first space domain statistical covariance matrix based on the eigenvalue and the eigenvector matrix.

Specifically, the terminal device may calculate the first space domain statistical covariance matrix corresponding to each delay path. A first space domain statistical covariance matrix $R_{hh,n} = E(h_n h_n^H)$ corresponding to a delay path n (where n is an integer greater than or equal to 1) is used as an example, where E represents an expected function, $h_n$ is a channel matrix corresponding to the delay path n, a dimension of $R_{hh,n}$ is $N_{tx} \times N_{tx}$, and $N_{tx}$ is a quantity of transmit antenna ports of the access network device. Further, the terminal device may send $R_{hh,n}$ of the delay path n to the access network device in a quantized feedback manner. For example, the following characteristic decomposition may be performed on $R_{hh,n}$ of the delay path n:

$$R_{hh,n} = U_n C_n U_n^H$$

$C_n = \mathrm{diag}(c_n) \in \mathbb{R}^{K \times K}$ is a diagonal matrix, an element on a diagonal in the diagonal matrix is an eigenvalue, and $U_n \in \mathbb{C}^{N_{tx} \times K}$ is an eigenvector matrix. Therefore, the terminal device may feed back indication information of the eigenvalue and the eigenvector matrix that are obtained through decomposition as the second information to the access network device. $\mathbb{R}$ represents a real number set, K represents a quantity of eigenvalues, and $\mathbb{C}$ represents a complex number set.

Optionally, for the eigenvector matrix, the terminal device feeds back the eigenvector matrix to the access network device in a manner of projecting the eigenvector matrix to a DFT base. The DFT base is a matrix used to perform discrete Fourier transform, and projecting the eigenvector matrix to the DFT base is multiplying the eigenvector matrix by a DFT base matrix, where a coefficient obtained through the multiplication is a projection value. Therefore, the terminal device may feed back indication information of the proj ection value of the eigenvector matrix on the DFT base to the access network device, or feed back indication information of a quantized projection value to the access network device. The access network device multiplies the projection value by an inverse matrix of the DFT base to restore the eigenvector matrix.

Optionally, for the eigenvalue, the terminal device feeds back an eigenvalue of each delay path to the access network device in a manner of directly feeding back indication information of the eigenvalue corresponding to each delay path, or feeds back an eigenvalue of each delay path to the access network device in a manner of feeding back indication information of a reference eigenvalue and indication information of difference information between the eigenvalue of the delay path and the reference eigenvalue. The reference eigenvalue is a maximum eigenvalue in eigenvalues corresponding to a delay path, or the reference eigenvalue is a maximum value in eigenvalues corresponding to delay paths, or the reference eigenvalue is an average value of eigenvalues corresponding to delay paths, or the reference eigenvalue is a median of eigenvalues corresponding to delay paths. This is specifically determined based on an actual application scenario and is not limited herein.

For example, it is assumed that there are four delay paths: a delay path 1, a delay path 5, a delay path 8, and a delay path 9. It is assumed that eigenvalues corresponding to the delay path 1 are {1, 2, 3, 4}, eigenvalues corresponding to the delay path 5 are {1, 3, 5, 6}, eigenvalues corresponding to the delay path 8 are {3, 4, 4, 6}, and eigenvalues corresponding to the delay path 9 are {2, 2, 3, 4}. In this case, the following can be obtained:

In an implementation, the terminal device directly feeds back eigenvalues of the foregoing delay paths to the access network device, to be specific, provides a feedback that the eigenvalues corresponding to the delay path 1 are {1, 2, 3, 4}, the eigenvalues corresponding to the delay path 5 are {1, 3, 5, 6}, the eigenvalues corresponding to the delay path 8 are {3, 4, 4, 6}, and the eigenvalues corresponding to the delay path 9 are {2, 2, 3, 4}.

In another implementation, it is assumed that the reference eigenvalue is the maximum value in the eigenvalues of each delay path. For the delay path 1, the reference eigenvalue is 4. Therefore, the terminal device may feed back the reference eigenvalue 4 and difference information between the reference eigenvalue 4 and the eigenvalues of the delay path 1, that is, {3, 2, 1, 0}. For the delay path 2, the reference eigenvalue is 6. Therefore, the terminal device may feed back the reference eigenvalue 6 and difference information between the reference eigenvalue 6 and the eigenvalues of the delay path 5, that is, {5, 3, 1, 0}. For the delay path 8, the reference eigenvalue is 6. Therefore, the terminal device may feed back the reference eigenvalue 6 and difference information between the reference eigenvalue 6 and the eigenvalues of the delay path 8, that is, {3, 2, 2, 0}. For the delay path 9, the reference eigenvalue is 4. Therefore, the terminal device may feed back the reference eigenvalue 4 and difference information between the reference eigenvalue 4 and the eigenvalues of the delay path 9, that is, {2, 2, 1, 0}.

In still another implementation, it is assumed that the reference eigenvalue is the maximum value in the eigenvalues of the delay paths. The fed-back reference eigenvalue is 6. For the delay path 1, difference information between the reference eigenvalue and the eigenvalues of the delay path 1, that is, {5, 4, 3, 2}, needs to be fed back. For the delay path 5, difference information between the reference eigenvalue and the eigenvalues of the delay path 5, that is, {5, 3, 1, 0}, needs to be fed back. For the delay path 8, difference information between the reference eigenvalue and the eigenvalues of the delay path 8, that is, {3, 2, 2, 0}, needs to be fed back. For the delay path 9, difference information between the reference eigenvalue and the eigenvalues of the delay path 9, that is, {4, 4, 3, 2}, needs to be fed back.

In another possible implementation, the second information indicates a first space domain statistical covariance matrix of each delay path of the channel in a manner of indicating a base combination coefficient matrix. Therefore, the access network device may restore or recover the first space domain statistical covariance matrix by using the base combination coefficient matrix indicated by the second information and a known base matrix. The known base matrix may be predefined in a protocol, or may be determined by the access network device and configured for the terminal device, or may be negotiated between the access network device and the terminal device.

Specifically, the terminal device may calculate the first space domain statistical covariance matrix corresponding to each delay path. An example in which a first space domain statistical covariance matrix corresponding to a delay path n is $R_{hh,n}$ is used. The terminal device may perform the following characteristic decomposition on $R_{hh,n}$ of the delay path n:

$$\mathrm{R}_{hh,n} = F\mathrm{C}_{\mathrm{n}}F^{H}$$

$F \in \mathbb{C}^{N_{tx} \times N_{tx}}$ is the known base matrix, for example, may be a space domain base matrix, where an expression of the space domain base matrix is $F = F_h \odot F_v$, where $\odot$ represents a Kronecker (Kronecker) product, $F_h$ and $F_v$ are DFT matrices whose dimensions are $N_{txh}$ and $N_{txv}$ respectively, and $N_{txh}$ and $N_{txv}$ are a quantity of antenna ports in a horizontal direction and a quantity of antenna ports in a vertical direction of an antenna of the access network device respectively.

$\mathrm{C}_{\mathrm{n}} \in \mathbb{C}^{N_{tx} \times N_{tx}}$ is the base combination coefficient matrix. Therefore, the terminal device may feed back indication information of the base combination coefficient matrix obtained through decomposition as the second information to the access network device.

It should be noted that the first channel delay domain sparsity information represents N delay paths (where N is an integer greater than or equal to 1) by using the first bitmap, the delay path index, or the combination quantity of delay paths. Correspondingly, the space domain statistics information of the channel includes a first space domain statistical covariance matrix of each delay path in the N delay paths of the channel, where one delay path corresponds to one first space domain statistical covariance matrix.

In an application scenario, to reduce feedback overheads, the access network device may indicate the terminal device to feed back only space domain statistical covariance matrices of some delay paths with low energy (that is, weak delay paths). Because a signal-to-noise ratio of the remaining delay paths with high energy (namely, strong delay paths) is high, the access network device may directly estimate a corresponding space domain statistical covariance matrix based on a received second reference signal. For ease of description, subsequently, the space domain statistical covariance matrix obtained by the access network device through estimation based on the second reference signal is described as a second space domain statistical covariance matrix.

Specifically, the access network device may send third information to the terminal device, where the third information is for division into a first-type delay path and a second-type delay path in channel delay domain, and energy of each delay path in the first-type delay path is greater than energy of each delay path in the second-type delay path. Herein, the first-type delay path may be described as a strong delay path, and the second-type delay path may be described as a weak delay path. Therefore, after receiving the third information from the access network device, the terminal device may determine a strong delay path and a weak delay path in channel delay domain based on the third information, so that the terminal device may feed back only a location of the weak delay path and a first space domain statistical covariance matrix corresponding to the weak delay path.

It may be understood that the third information may be carried in the first configuration information, or the third information may be sent by using other signaling or messages. This is not limited herein.

In a possible implementation, the third information may be indication information of an energy threshold. Therefore, after receiving the third information, the terminal device may determine a delay path whose energy is greater than the energy threshold in the delay paths as the first-type delay path, determine a delay path whose energy is less than the energy threshold in the delay paths as the second-type delay path, and determine a delay path whose energy is equal to the energy threshold as the first-type delay path or the second-type delay path. This is specifically determined based on an actual application scenario, and is not limited herein. For example, the access network device may determine the energy threshold based on an estimated signal-to-noise ratio of the second reference signal.

In another possible implementation, the third information may be indication information of a quantity p of strong delay paths or a quantity q of weak delay paths. For example, assuming that the third information is the indication information of the quantity p of strong delay paths, after receiving the third information, the terminal device may sort the delay paths in descending order of energy or in ascending order of energy, determine p maximum delay paths obtained through sorting as first-type delay paths, and determine a delay path other than the first-type delay path as the second-type delay path. For another example, assuming that the third information is the indication information of the quantity q of weak delay paths, after receiving the third information, the terminal device may sort the delay paths in descending order of energy or in ascending order of energy, determine q minimum delay paths obtained through sorting as second-type delay paths, and determine a delay path other than the second-type delay path as the first-type delay path.

It should be noted that, when the third information is the indication information of the quantity p of strong delay paths, a value of p is less than or equal to a total quantity N of delay paths of the channel. Optionally, when the value of p is greater than the total quantity N of delay paths of the channel, the terminal device considers each delay path in channel delay domain as a strong delay path by default. When the third information is the indication information of the quantity q of weak delay paths, a value of q is less than or equal to a total quantity N of delay paths of the channel. Optionally, when the value of q is greater than the total quantity N of delay paths of the channel, the terminal device considers each delay path in channel delay domain as a weak delay path by default.

In still another possible implementation, the third information may alternatively be indication information of p/N, q/N, p/q, or q/p.

For example, it is assumed that there are four delay paths: a delay path 1, a delay path 5, a delay path 8, and a delay path 9, where energy of the delay path 1 is E1, energy of the delay path 5 is E5, energy of the delay path 8 is E8, and energy of the delay path 9 is E9. In this case, the following can be obtained:

In an implementation, it is assumed that the third information is the indication information of the energy threshold. For example, the energy threshold is represented as E0. If determining that E1, E5, and E8 are all greater than E0, and E9 is less than E0, the terminal device may determine the delay path 1, the delay path 5 and the delay path 8 are first-type delay paths, namely, strong delay paths, and the delay path 9 is a second-type delay path, namely, the weak delay path.

In another implementation, it is assumed that the third information is the indication information of the quantity p of strong delay paths, where p=3. The terminal device may sort the foregoing four delay paths in descending order of energy. Assuming that E5>E1>E8>E9, the terminal device may determine first three delay paths with highest energy as strong delay paths, in other words, the strong delay paths are the delay path 1, the delay path 5, and the delay path 8, and determine a delay path other than the three delay paths with highest energy as a weak delay path, in other words, the weak delay path is the delay path 9.

In still another implementation, it is assumed that the third information is the indication information of the quantity q of weak delay paths, where q=1. The terminal device may sort the foregoing four delay paths in descending order of energy. Assuming that E5>E1>E8>E9, the terminal device may determine one delay path with lowest energy as a weak delay path, in other words, the weak delay path is the delay path 9, and determine delay paths other than the one delay path with lowest energy as strong delay paths, in other words, the strong delay paths are the delay path 1, the delay path 5, and the delay path 8.

In yet another implementation, it is assumed that the third information is the indication information of p/W. For example, p/W=0.75. The terminal device may determine, based on 0.75, that a quantity of strong delay paths is $4 \times 0.75 = 3$. Therefore, the terminal device may sort the foregoing four delay paths in descending order of energy. Assuming that E5>E1>E8>E9, the terminal device may determine first three delay paths with highest energy as strong delay paths, in other words, the strong delay paths are the delay path 1, the delay path 5, and the delay path 8, and determine a delay path other than the three delay paths with highest energy as a weak delay path, in other words, the weak delay path is the delay path 9.

It should be noted that, after the terminal device receives the third information from the access network device, and determines the first-type delay path and the second-type delay path based on the third information, the terminal device may feed back only the location of the weak delay path and indication information of the first space domain statistical covariance matrix corresponding to the weak delay path.

In an implementation, when the first channel delay domain sparsity information included in the first measurement information indicates a location of each delay path of the channel, the first measurement information further includes fourth information. The fourth information is combined with the first channel delay domain sparsity information that indicates the location of each delay path of the channel, to determine a location of the second-type delay path (namely, the weak delay path) of the channel. Correspondingly, that the space domain statistics information of the channel includes the first space domain statistical covariance matrix of the channel is understood as: The space domain statistics information of the channel includes the first space domain statistical covariance matrix of the second-type delay path of the channel, in other words, the space domain statistics information of the channel is understood as including only the first space domain statistical covariance matrix on the weak delay path of the channel.

For example, the fourth information may be represented by using a third bitmap, where a length of the third bitmap is the total quantity of delay paths of the channel. A bit location of a first value in the third bitmap represents a location of the first-type delay path, and a bit location of a second value in the third bitmap represents a location of the second-type delay path. In other words, the location of the weak delay path may be jointly represented by using the first bitmap and the third bitmap. For an understanding of the first bitmap, refer to the foregoing descriptions. Details are not described herein again.

The first value may be 1, and the second value may be 0; or the first value is 0, and the second value is 1. This is not limited herein. For ease of understanding, the following mainly uses an example in which the first value is 0 and the second value is 1 for illustration.

For example, it is assumed that the first bitmap is 1000100110. It may be determined that there are four delay paths: a delay path 1, a delay path 5, a delay path 8, and a delay path 9. It is further assumed that the third bitmap is 0001, and delay path indexes increase sequentially from left to right. Therefore, it may be determined that the delay path 1, the delay path 5 and the delay path 8 are first-type delay paths, and the delay path 9 is a second-type delay path.

In another implementation, the first channel delay domain sparsity information included in the first measurement information is understood as indicating only the location of the weak delay path of the channel. Correspondingly, that the space domain statistics information of the channel includes the first space domain statistical covariance matrix of the channel is understood as: The space domain statistics information of the channel includes the first space domain statistical covariance matrix of the second-type delay path of the channel, in other words, the space domain statistics information of the channel is understood as including only the first space domain statistical covariance matrix on the weak delay path of the channel.

For example, when the first channel delay domain sparsity information indicates only the location of the weak delay path, the first channel delay domain sparsity information may be represented by using a second bitmap, where a length of the second bitmap is the quantity of resource blocks RBs. A first value in the second bitmap indicates the location of the second-type delay path. The first value may be specifically 1, or may be 0. This is not limited herein.

For example, assuming that the second bitmap is 0000000010, the location of the weak delay path is a $9^{th}$ delay sample point. Subsequently, a delay path corresponding to the $9^{th}$ delay sample point may be described as a delay path 9.

For another example, when the first channel delay domain sparsity information indicates only the location of the weak delay path, the first channel delay domain sparsity information may directly include an index of the second-type delay path. Correspondingly, that the space domain statistics information of the channel includes the first space domain statistical covariance matrix of the channel is understood as: The space domain statistics information of the channel includes the first space domain statistical covariance matrix of the second-type delay path of the channel, in other words, the space domain statistics information of the channel is understood as including only the first space domain statistical covariance matrix on the weak delay path of the channel.

For example, the first channel delay domain sparsity information may include a delay path index 9. Therefore, the second-type delay path may be determined based on the delay path index, in other words, the second-type delay path includes a delay path 9 corresponding to the delay path index 9.

In still another example, the first channel delay domain sparsity information indicates a combination quantity of second-type delay paths. For example, the first channel delay domain sparsity information may be represented by using the combination quantity of second-type delay paths. For example, if a channel with 10 frequencies includes one second-type delay path, there are a total of $C_{10}^1 = 10$ combination forms of locations of the second-type delay path. Therefore, the corresponding second-type delay path may be determined based on a quantity of second-type delay paths and a sequence number of a combination of the locations of the second-type delay path. For example, it may be agreed that when the quantity of second-type delay paths is 1, a 9th combination of the locations of the second-type delay path is that the second-type delay path is at a 9th delay sample point.

S404: The terminal device sends the second reference signal to the access network device. Correspondingly, the access network device receives the second reference signal from the terminal device.

The second reference signal may be an SRS, a DMRS, or the like. This is not limited herein.

Optionally, before S404, the access network device may send second configuration information to the terminal device, where the second configuration information is used to configure information related to the second reference signal, for example, configure a resource on which the terminal device sends the second reference signal. It may be understood that the second configuration information and the first configuration information may be carried in a same message, or may be separately carried in different messages.

It should be noted that, a sequence of numbers of the foregoing steps S401 to S404 does not indicate a sequence of performing the steps.

S405: The access network device determines channel state information based on the first measurement information and the second reference signal.

In the foregoing S403, the first measurement information sent by the terminal device includes at least one of the first information and the second information. The following mainly uses an example in which the first information is the first channel delay domain sparsity information, and the second information is the first space domain statistical covariance matrix of each delay path of the channel or the first space domain statistical covariance matrix of the second-type delay path for description.

In a possible implementation, when the first measurement information includes the first channel delay domain sparsity information and the first space domain statistical covariance matrix of the channel, that the access network device determines channel state information based on the first measurement information and the second reference signal may be understood as: The access network device determines first delay domain channel information based on the second reference signal, and determines second delay domain channel information, where the second delay domain channel information is obtained based on the first channel delay domain sparsity information and the first delay domain channel information, in other words, the access network device may obtain the second delay domain channel information by performing noise reduction processing on the first delay domain channel information by using the first channel delay domain sparsity information. Further, the access network device performs uplink channel estimation based on the first space domain statistical covariance matrix of the channel and the second delay domain channel information, and determines, by using reciprocity between uplink and downlink channels, an uplink channel estimation result as a downlink channel estimation result, in other words, determines channel state information obtained through uplink channel estimation as channel state information of the downlink channel.

That the access network device determines delay domain channel information based on the second reference signal may be understood as: The access network device performs LS estimation on the sent second reference signal and the received second reference signal, to obtain a noisy channel $\hat{H}$, and then converts the noisy channel $\hat{H}$ to delay domain, to obtain the delay domain channel information. For example, delay domain channel information of a delay path n may be represented as $\hat{h}_n$, where n=1, 2, ..., or $N_{RE}$, and $N_{RE}$ represents the quantity of REs.

It should be noted that the first channel delay domain sparsity information usually indicates channel delay domain sparsity information at an RB granularity. Therefore, the determining second delay domain channel information may be understood as: determining channel delay domain sparsity information at an RE granularity based on the channel delay domain sparsity information at the RB granularity; and determining the second delay domain channel information based on the channel delay domain sparsity information at the RE granularity and the first delay domain channel information. In other words, the performing noise reduction processing on the first delay domain channel information by using the first channel delay domain sparsity information, to obtain the second delay domain channel information may be specifically understood as: determining the channel delay domain sparsity information at the RE granularity based on the channel delay domain sparsity information at the RB granularity, and performing noise reduction processing on the first delay domain channel information based on the channel delay domain sparsity information at the RE granularity, to obtain the second delay domain channel information. The noise reduction processing in this embodiment of this application may be understood as setting, based on the channel delay domain sparsity information, a channel at a location in which a non-delay path is located to zero. For example, assuming that the channel delay domain sparsity information at the RE granularity is 1000100110 padded with 50 zeros, channel matrices corresponding to a 1st delay sample point, a 5th delay sample point, an 8th delay sample point, and a 9th delay sample point in 60 delay sample points are reserved, and channel matrices corresponding to the remaining 56 delay sample points are set to 0. It may be understood that, because information in delay domain after DFT transform is information in frequency domain, a quantity of delay sample points corresponding to the delay domain channel information determined based on the second reference signal is equal to a quantity of REs in frequency domain.

The channel delay domain sparsity information at the RB granularity may be converted into the channel delay domain sparsity information at the RE granularity by performing zero padding on the channel delay domain sparsity information at the RB granularity, to obtain the channel delay domain sparsity information at the RE granularity. It may be understood that, the first channel delay domain sparsity information included in the first measurement information is at the RB granularity, and the delay domain channel information determined based on the second reference signal is at the RE granularity. Therefore, the first channel delay domain sparsity information needs to be padded with zeros to match the delay domain channel information determined based on the second reference signal, to perform noise reduction processing.

For example, it is assumed that the channel delay domain sparsity information at the RB granularity is represented as $S$, where $S=(S_i), i=1, 2, ...,$ or $N_{RB}$, and the channel delay domain sparsity information at the RE granularity is represented as $\hat{S}$. Then, $\hat{S}=(\hat{S}_m)$:

$$\hat{S}_m = \begin{cases} S_m, & m = 1,2, ..., N_{RB} \\ 0, & m = N_{RB} + 1, N_{RB} + 2, ..., N_{RE} \end{cases}$$

$N_{RB}$ indicates a quantity of RBs, and $N_{RE}$ indicates a quantity of REs.

For example, it is assumed that the first channel delay domain sparsity information at the RB granularity is 1000100110, and zeros are padded with the channel delay domain sparsity information at the RB granularity to the channel delay domain sparsity information at the RE granularity. For example, for a comb-2 SRS, 50 zeros are padded after 1000100110, to obtain the channel delay domain sparsity information at the RE granularity. Combing means that SRS frequency-domain resources are allocated in a comb structure. Comb-2 means that one RE is selected for every two REs to carry an SRS, in other words, an SRS with a total bandwidth of 120 REs (corresponding to 10 RBs) actually occupies 60 REs in frequency domain.

For example, that the access network device performs uplink channel estimation based on the first space domain statistical covariance matrix and delay domain channel information that is obtained after noise reduction processing may be understood as: The access network device performs LMMSE estimation on the first space domain statistical covariance matrix corresponding to each delay path and the delay domain channel information that is obtained after noise reduction processing, to obtain an estimated uplink channel of each delay path. For example, a delay path n is used as an example. The access network device may restore, based on an eigenvector matrix $U_n$ and an eigenvalue $c_n$ that are corresponding to the delay path n and that are obtained by using feedback information of the terminal device, that a first space domain statistical covariance matrix corresponding to the delay path n is $R_{hh,n}$, and perform LMMSE estimation based on $R_{hh,n}$ and the delay domain channel information $\hat{h}_n$, to obtain an LMMSE estimation value of an uplink estimated channel matrix $h_n$ corresponding to the delay path n:

$$h_n = \begin{cases} R_{hh,n}(R_{hh,n} + \sigma^2 I)^{-1}\hat{h}_n, & S_n = 1 \\ 0, & S_n = 0 \end{cases}$$

$\sigma$ represents a variance of noise, and $I$ is an identity matrix.

It may be understood that a set formed by an uplink estimated channel of each delay path is a complete uplink estimated channel. It should be noted that, because a TDD system has uplink and downlink reciprocity, the obtained complete uplink estimated channel (that is, an uplink channel estimation result) may be determined as a downlink channel estimation result.

In a related technology, both the channel delay domain sparsity information and the space domain statistical covariance matrix that are used for channel estimation are obtained by the access network device through estimation based on the received second reference signal. However, in this implementation of this embodiment of this application, both the channel delay domain sparsity information (that is, the first channel delay domain sparsity information) and the space domain statistical covariance matrix (that is, the first space domain statistical covariance matrix of the channel) are reported by the terminal device to the access network device. Because a transmit power at which the terminal device sends the second reference signal is lower than a transmit power at which the access network device sends the first reference signal, precision of the channel delay domain sparsity information and the space domain statistical covariance matrix that are obtained by the access network device through estimation based on the second reference signal is lower than precision of the channel delay domain sparsity information and the space domain statistical covariance matrix that are obtained by the terminal device through estimation based on the first reference signal. Based on this, in this embodiment of this application, the access network device performs downlink channel estimation based on the channel delay domain sparsity information and the space domain statistical covariance matrix that are fed back by the terminal device and that have higher accuracy and precision, to help improve precision of downlink channel estimation.

**In** another possible implementation, when the first measurement information includes the first channel delay domain sparsity information, that the access network device determines channel state information based on the first measurement information and the second reference signal may be understood as: The access network device determines first delay domain channel information based on the second reference signal, and determines the second delay domain channel information, where the second delay domain channel information is obtained based on the first channel delay domain sparsity information and the first delay domain channel information, or in other words, the access network device may obtain the second delay domain channel information by performing noise reduction processing on the first delay domain channel information by using the first channel delay domain sparsity information. Further, the access network device determines the second space domain statistical covariance matrix, performs uplink channel estimation based on the second space domain statistical covariance matrix and the second delay domain channel information, in other words, determines channel state information, and determines, by using reciprocity between uplink and downlink channels, an uplink channel estimation result as a downlink channel estimation result.

The second space domain statistical covariance matrix is obtained based on the second reference signal. More specifically, the second space domain statistical covariance matrix is obtained through estimation based on the second reference signal and the first channel delay domain sparsity information. **In** other words, the access network device may determine the delay path of the channel based on the first channel delay domain sparsity information, and then estimate, based on the second reference signal, the second space domain statistical covariance matrix corresponding to each delay path in the delay paths indicated by the first channel delay domain sparsity information.

For an understanding of performing noise reduction processing on the delay domain channel information based on the first channel delay domain sparsity information, refer to the foregoing related descriptions, and details are not described herein again. For an understanding of performing uplink channel estimation based on the second space domain statistical covariance matrix and the second delay domain channel information, refer to the foregoing descriptions of performing uplink channel estimation based on the first space domain statistical covariance matrix and the second delay domain channel information, and details are not described herein again.

It should be noted that, in this implementation, the channel delay domain sparsity information (that is, the first channel delay domain sparsity information) used for channel estimation is reported by the terminal device to the access network device, and the space domain statistical covariance matrix (that is, the second space domain statistical covariance matrix) is obtained through estimation by the access network device by using the received second reference signal. Because a transmit power at which the terminal device sends the second reference signal is lower than a transmit power at which the access network device sends the first reference signal, precision of the channel delay domain sparsity information obtained by the access network device through estimation based on the second reference signal is lower than precision of the first channel delay domain sparsity information obtained by the terminal device through estimation based on the first reference signal. Based on this, in this embodiment of this application, the access network device performs downlink channel estimation based on the first channel delay domain sparsity information that is fed back by the terminal device and that has higher accuracy, to help improve accuracy and precision of downlink channel estimation. In addition, because the terminal device does not need to feed back indication information of the space domain statistical covariance matrix, air interface transmission overheads are reduced.

In still another possible implementation, when the first measurement information includes the first space domain statistical covariance matrix of the channel, that the access network device determines channel state information based on the first measurement information and the second reference signal may be understood as follows: The access network device determines the first delay domain channel information and the second channel delay domain sparsity information based on the second reference signal, where the second channel delay domain sparsity information is obtained based on the second reference signal, in other words, the second channel delay domain sparsity information is obtained by estimating the second reference signal. Further, the access network device determines the second delay domain channel information, where the second delay domain channel information is obtained based on the second channel delay domain sparsity information and the first delay domain channel information, or in other words, the access network device may obtain the second delay domain channel information by performing noise reduction processing on the first delay domain channel information based on the second channel delay domain sparsity information. Then, the access network device may determine the channel state information based on the first space domain statistical covariance matrix of the channel and the second delay domain channel information, in other words, performs uplink channel estimation on the first space domain statistical covariance matrix of the channel and the second delay domain channel information, and determines, by using reciprocity between uplink and downlink channels, an uplink channel estimation result as a downlink channel estimation result.

It should be noted that the second channel delay domain sparsity information in this embodiment of this application is obtained through estimation based on the second reference signal, and the second channel delay domain sparsity information is channel delay domain sparsity information at an RE granularity.

For an understanding of performing noise reduction processing on the first delay domain channel information based on the second channel delay domain sparsity information, refer to the foregoing related descriptions of performing noise reduction processing on the first delay domain channel information based on the first channel delay domain sparsity information, and details are not described herein again.

It should be noted that, in this implementation, the space domain statistical covariance matrix (that is, the first space domain statistical covariance matrix) used for channel estimation is reported by the terminal device to the access network device, and the channel delay domain sparsity information (that is, the second channel delay domain sparsity information) is obtained through estimation by the access network device by using the received second reference signal. Because a transmit power at which the terminal device sends the second reference signal is lower than a transmit power at which the access network device sends the first reference signal, precision of the space domain statistical covariance matrix obtained by the access network device through estimation based on the second reference signal is lower than precision of the first space domain statistical covariance matrix obtained by the terminal device through estimation based on the first reference signal. Based on this, in this embodiment of this application, the access network device performs downlink channel estimation based on the first space domain statistical covariance matrix that is fed back by the terminal device and that has higher accuracy, to help improve accuracy and precision of downlink channel estimation. In addition, because the terminal device does not need to feed back the channel delay domain sparsity information, air interface transmission overheads are reduced.

In this embodiment of this application, based on TDD uplink and downlink reciprocity, the access network device uses the first measurement information fed back by the terminal device to assist in SRS estimation, to resolve a problem that accuracy of obtained downlink channel estimation is low because accuracy of uplink channel estimation is low when an SRS signal-to-noise ratio is low. In addition, if the terminal device directly feeds back, to the access network device as a downlink channel estimation value, downlink channel information obtained through estimation based on the first reference signal, precision is affected because the downlink channel estimation value that is fed back has a quantization loss. In this embodiment of this application, a downlink channel estimation value that is partially determined through uplink channel estimation (that is, the second reference signal) and downlink channel estimation (that is, the first measurement information) in combination with reciprocity between uplink and downlink channels, so that good performance can be achieved.

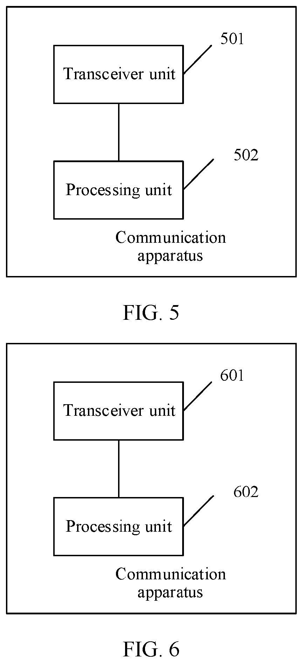

The following describes in detail a communication apparatus provided in this application with reference to FIG. 5 to FIG. 8.

FIG. 5 is a diagram of a structure of a communication apparatus according to an embodiment of this application. The communication apparatus shown in FIG. 5 may be configured to perform some or all functions of the terminal device in the method embodiment described in FIG. 4. The apparatus may be a terminal device, or may be an apparatus in a terminal device, or may be an apparatus that can be used together with a terminal device. The communication apparatus may alternatively be a chip system. The communication apparatus shown in FIG. 5 may include a transceiver unit 501 and a processing unit 502. The processing unit 502 is configured to process data. The transceiver unit 501 is integrated with a receiving unit and a sending unit. The transceiver unit 501 may also be referred to as a communication unit. Alternatively, the transceiver unit 501 may be split into a receiving unit and a sending unit. The same applies to the processing unit 502 and the transceiver unit 501 below. Details are not described below.

The transceiver unit 501 is configured to receive a first reference signal from an access network device.

The processing unit 502 is configured to determine first measurement information based on the first reference signal.

The transceiver unit 501 is further configured to send the first measurement information to the access network device.

The transceiver unit 501 is further configured to send a second reference signal to the access network device, where the first measurement information and the second reference signal are used to determine channel state information.

In a possible implementation, the first measurement information includes at least one of first information and second information, the first information indicates channel delay domain information, and the second information indicates space domain statistics information of a channel.

**In** a possible implementation, the channel delay domain information includes first channel delay domain sparsity information, and the space domain statistics information of the channel includes a first space domain statistical covariance matrix of the channel.

**In** a possible implementation, the first channel delay domain sparsity information includes a first bitmap, the first bitmap indicates a location of a delay path, and a length of the first bitmap is a quantity of RBs.

That the space domain statistics information of the channel includes a first space domain statistical covariance matrix of the channel includes:

The space domain statistics information of the channel includes a first space domain statistical covariance matrix of each delay path of the channel.

In a possible implementation, the transceiver unit 501 is further configured to:

receive third information from the access network device, where the third information is for division into a first-type delay path and a second-type delay path in channel delay domain, and energy of each delay path in the first-type delay path is greater than energy of each delay path in the second-type delay path.

In a possible implementation, the first channel delay domain sparsity information includes a second bitmap, the second bitmap indicates a location of the second-type delay path, and a length of the second bitmap is the quantity of resource blocks RBs.

That the space domain statistics information of the channel includes a first space domain statistical covariance matrix of the channel includes:

The space domain statistics information of the channel includes a first space domain statistical covariance matrix of the second-type delay path of the channel.

In a possible implementation, the second information indicates an eigenvalue and an eigenvector matrix that correspond to the first space domain statistical covariance matrix of each delay path or the second-type delay path of the channel.

In a possible implementation, the second information indicates a base combination coefficient matrix corresponding to the first space domain statistical covariance matrix of each delay path or the second-type delay path of the channel.

In a possible implementation, the first reference signal includes a channel state information reference signal CSI-RS, and the second reference signal includes a sounding reference signal SRS.

For another possible implementation of the communication apparatus, refer to related descriptions of the functions of the terminal device in the method embodiment corresponding to FIG. 4. Details are not described herein again.

FIG. 6 is a diagram of a structure of another communication apparatus according to an embodiment of this application. The communication apparatus shown in FIG. 6 may be configured to perform some or all functions of the access network device in the method embodiment described in FIG. 4. The apparatus may be an access network device, or may be an apparatus in an access network device, or may be an apparatus that can be used together with an access network device. The communication apparatus may alternatively be a chip system. The communication apparatus shown in FIG. 6 may include a transceiver unit 601 and a processing unit 602.

The transceiver unit 601 is configured to send a first reference signal to a terminal device.

The transceiver unit 601 is further configured to receive first measurement information from the terminal device, where the first measurement information is determined based on the first reference signal.

The transceiver unit 601 is further configured to receive a second reference signal from the terminal device.

The processing unit 602 is configured to determine channel state information based on the first measurement information and the second reference signal.

In a possible implementation, the first measurement information includes at least one of first information and second information, the first information indicates channel delay domain information, and the second information indicates space domain statistics information of a channel.

In a possible implementation, the channel delay domain information includes first channel delay domain sparsity information, and the space domain statistics information of the channel includes a first space domain statistical covariance matrix of the channel.

In a possible implementation, the first channel delay domain sparsity information includes a first bitmap, the first bitmap indicates a location of a delay path, and a length of the first bitmap is a quantity of RBs.

In a possible implementation, the transceiver unit 601 is further configured to:

send third information to the terminal device, where the third information is for division into a first-type delay path and a second-type delay path in channel delay domain, and energy of each delay path in the first-type delay path is greater than energy of each delay path in the second-type delay path.

That the space domain statistics information of the channel includes a first space domain statistical covariance matrix of the channel includes:

The space domain statistics information of the channel includes a first space domain statistical covariance matrix of the second-type delay path of the channel.

In a possible implementation, the first channel delay domain sparsity information includes a second bitmap, the second bitmap indicates a location of the second-type delay path, and a length of the second bitmap is the quantity of resource blocks RBs.

That the space domain statistics information of the channel includes a first space domain statistical covariance matrix of the channel includes:

The space domain statistics information of the channel includes a first space domain statistical covariance matrix of the second-type delay path of the channel.

In a possible implementation, the second information indicates an eigenvalue and an eigenvector matrix that correspond to the first space domain statistical covariance matrix of each delay path or the second-type delay path of the channel.

In a possible implementation, the second information indicates the first space domain statistical covariance matrix of the channel by indicating a base combination coefficient matrix.

In a possible implementation, the first reference signal includes a channel state information reference signal CSI-RS, and the second reference signal includes a sounding reference signal SRS.

In a possible implementation, the first measurement information includes the first channel delay domain sparsity information and the first space domain statistical covariance matrix of the channel.

The processing unit 602 is further configured to determine first delay domain channel information based on the second reference signal.

The processing unit 602 is further configured to determine second delay domain channel information, where the second delay domain channel information is obtained based on the first channel delay domain sparsity information and the first delay domain channel information.

The processing unit 602 is further configured to determine channel state information based on the first space domain statistical covariance matrix of the channel and the second delay domain channel information.

In a possible implementation, the first measurement information includes the first channel delay domain sparsity information.

The processing unit 602 is further configured to determine first delay domain channel information based on the second reference signal.

The processing unit 602 is further configured to determine second delay domain channel information, where the second delay domain channel information is obtained based on the first channel delay domain sparsity information and the first delay domain channel information.

The processing unit 602 is further configured to determine a second space domain statistical covariance matrix, where the second space domain statistical covariance matrix is obtained based on the second reference signal.

The processing unit 602 is further configured to determine channel state information based on the second space domain statistical covariance matrix and the second delay domain channel information.

In a possible implementation, the first measurement information includes the first space domain statistical covariance matrix of the channel.

The processing unit 602 is further configured to determine first delay domain channel information based on the second reference signal.

The processing unit 602 is further configured to determine second channel delay domain sparsity information, where the second channel delay domain sparsity information is obtained based on the second reference signal.

The processing unit 602 is further configured to determine second delay domain channel information, where the second delay domain channel information is obtained based on the second channel delay domain sparsity information and the first delay domain channel information.

The processing unit 602 is further configured to determine channel state information based on the first space domain statistical covariance matrix of the channel and the second delay domain channel information.

In a possible implementation, the first channel delay domain sparsity information is channel delay domain sparsity information at an RB granularity.

The processing unit 602 is further configured to:

determine channel delay domain sparsity information at a resource element RE granularity based on the channel delay domain sparsity information at the RB granularity; and
determine the second delay domain channel information based on the channel delay domain sparsity information at the RE granularity and the first delay domain channel information.

For another possible implementation of the communication apparatus, refer to related descriptions of the functions of the access network device in the method embodiment corresponding to FIG. 4. Details are not described herein again.

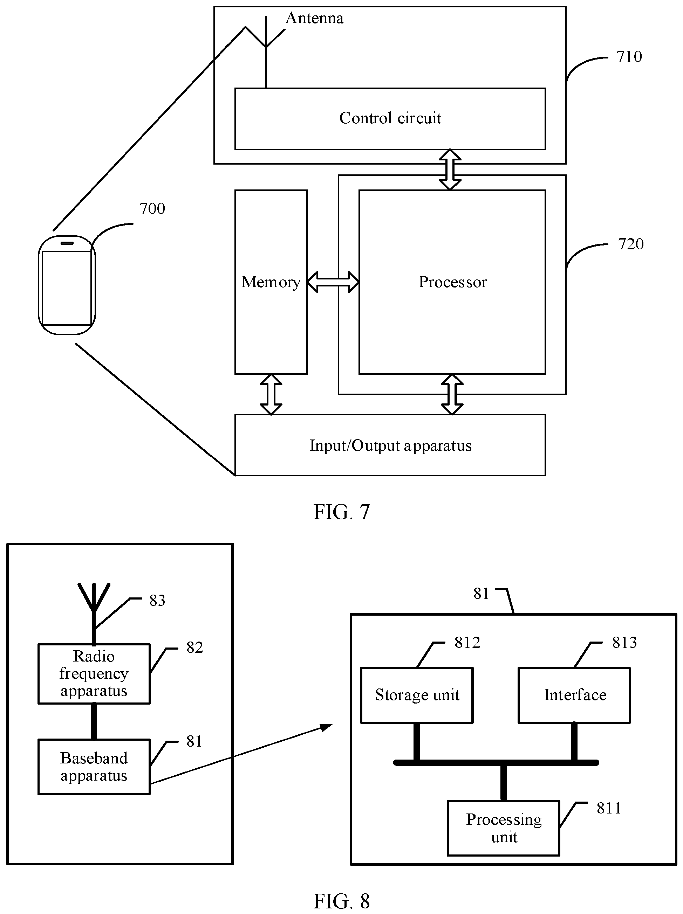

FIG. 7 is a diagram of a structure of another communication apparatus according to an embodiment of this application. As shown in FIG. 7, the communication apparatus may be the terminal device described in embodiments of this application, and is configured to implement functions of the terminal device in FIG. 4. For ease of description, FIG. 7 shows only main components of a terminal device 700. As shown in FIG. 7, the terminal device 700 includes a processor, a memory, a control circuit, an antenna, and an input/output apparatus. The processor is mainly configured to: process a communication protocol and communication data, control the entire terminal device 700, execute a software program, and process data of the software program. The memory is mainly configured to store the software program and data. The control circuit is mainly configured to: convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to: receive data input by a user and output data to the user.

For example, the terminal device 700 is a mobile phone. After the terminal device 700 is powered on, the processor may read a software program in a storage unit, interpret and execute instructions of the software program, and process data of the software program. When data needs to be sent wirelessly, after performing baseband processing on to-be-sent data, the processor outputs a baseband signal to the control circuit, and after performing radio frequency processing on the baseband signal, the control circuit sends a radio frequency signal in a form of an electromagnetic wave via the antenna. When data is sent to the terminal device 700, the control circuit receives a radio frequency signal via the antenna, converts the radio frequency signal into a baseband signal, and outputs the baseband signal to the processor. The processor converts the baseband signal into data, and processes the data.

A person skilled in the art may understand that, for ease of description, FIG. 7 shows only one memory and only one processor. In some embodiments, the terminal device 700 may include a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal device 700, execute the software program, and process the data of the software program. The processor in FIG. 7 integrates functions of the baseband processor and the central processing unit. A person skilled in the art may understand that the baseband processor and the central processing unit may alternatively be processors independent of each other, and are interconnected by using a technology such as a bus. The terminal device 700 may include a plurality of baseband processors to adapt to different network standards, the terminal device 700 may include a plurality of central processing units to enhance a processing capability of the terminal device 700, and components of the terminal device 700 may be connected through various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 710 of the terminal device 700, and the processor having a processing function may be considered as a processing unit 720 of the terminal device 700. As shown in FIG. 7, the terminal device 700 includes the transceiver unit 710 and the processing unit 720. The transceiver unit may also be referred to as a transceiver, a transceiver machine, a transceiver apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. In other words, the transceiver unit 710 includes the receiving unit and the sending unit. For example, the receiving unit may also be referred to as a receiver, a receive machine, a receiving circuit, or the like, and the sending unit may also be referred to as a transmitter, a transmit machine, a transmitting circuit, or the like.

FIG. 8 is a diagram of a structure of another communication apparatus according to an embodiment of this application. As shown in FIG. 8, the communication apparatus may be the network device described in embodiments of this application, and is configured to implement functions of the network device in FIG. 4. The network device includes: a baseband apparatus 81, a radio frequency apparatus 82, and an antenna 83. In an uplink direction, the radio frequency apparatus 82 receives, via the antenna 83, information sent by a terminal device, and sends, to the baseband apparatus 81 for processing, the information sent by the terminal device. In a downlink direction, the baseband apparatus 81 processes information of a terminal device, and sends processed information to the radio frequency apparatus 82; and the radio frequency apparatus 82 processes the information of the terminal device, and then sends processed information to the terminal device via the antenna 83.

The baseband apparatus 81 includes one or more processing units 811, a storage unit 812, and an interface 813. The processing unit 811 is configured to support the network device in performing the functions of the network device in the foregoing method embodiments. The storage unit 812 is configured to store a software program and/or data. The interface 813 is configured to exchange information with the radio frequency apparatus 82. The interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 812 and the processing unit 811 may be located in a same chip, that is, an on-chip storage element. Alternatively, the storage unit 812 and the processing unit 811 may be located in different chips, that is, an off-chip storage element. The storage unit 812 may be one memory, or may be a general term of a plurality of memories or storage elements.

The network device may implement some or all of the steps in the foregoing method embodiments in a form of scheduling a program by using one or more processing units. For example, corresponding functions of the network device in FIG. 4 are implemented. The one or more processing units may support radio access technologies of a same standard, or may support radio access technologies of different standards.

An embodiment of this application further provides a computer-readable storage medium. The computer-readable storage medium stores instructions, and when the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with units and steps in the examples described with reference to embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in another manner. For example, the described apparatus embodiment is merely an example. For example, division into units is merely logical function division. Units described as separate components may or may not be physically separate, and components displayed as units may or may not be physical units, in other words, may be located in one location, or may be distributed on a plurality of network units. Some or all of the units may be selected based on an actual requirement to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc storage, a disk storage medium, or another magnetic storage device, or any other medium that can be used to carry or store expected program code in a form of an instruction or a data structure and that can be accessed by the computer. In addition, by way of illustrative rather than limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1.    A channel state information determining method, wherein the method is applied to an access network device and comprises:

    sending a first reference signal to a terminal device;
    receiving first measurement information from the terminal device, wherein the first measurement information is determined based on the first reference signal;
    receiving a second reference signal from the terminal device; and

determining channel state information based on the first measurement information and the second reference signal.

2. The method according to claim 1, wherein the first measurement information comprises at least one of first information and second information, the first information indicates channel delay domain information, and the second information indicates space domain statistics information of a channel.

3. The method according to claim 2, wherein the channel delay domain information comprises first channel delay domain sparsity information, and the space domain statistics information of the channel comprises a first space domain statistical covariance matrix of the channel.

4. The method according to claim 3, wherein the first channel delay domain sparsity information comprises a first bitmap, the first bitmap indicates a location of a delay path, and a length of the first bitmap is a quantity of resource blocks RBs; and

   that the space domain statistics information of the channel comprises a first space domain statistical covariance matrix of the channel comprises:
   the space domain statistics information of the channel comprises a first space domain statistical covariance matrix of each delay path of the channel.

5. The method according to claim 3 or 4, wherein the method further comprises:
   sending third information to the terminal device, wherein the third information is for division into a first-type delay path and a second-type delay path in channel delay domain, and energy of each delay path in the first-type delay path is greater than energy of each delay path in the second-type delay path.

6. The method according to claim 5, wherein the first channel delay domain sparsity information comprises a second bitmap, the second bitmap indicates a location of the second-type delay path, and a length of the second bitmap is the quantity of resource blocks RBs; and

   that the space domain statistics information of the channel comprises a first space domain statistical covariance matrix of the channel comprises:
   the space domain statistics information of the channel comprises a first space domain statistical covariance matrix of the second-type delay path of the channel.

7. The method according to any one of claims 3 to 6, wherein the second information indicates an eigenvalue and an eigenvector matrix that correspond to the first space domain statistical covariance matrix of each delay path or the second-type delay path of the channel.

8. The method according to any one of claims 3 to 6, wherein the second information indicates a base combination coefficient matrix corresponding to the first space domain statistical covariance matrix of each delay path or the second-type delay path of the channel.

9. The method according to any one of claims 1 to 8, wherein the first reference signal comprises a channel state information reference signal CSI-RS, and the second reference signal comprises a sounding reference signal SRS.

10. The method according to any one of claims 3 to 9, wherein the first measurement information comprises the first channel delay domain sparsity information and the first space domain statistical covariance matrix of the channel; and the method further comprises:

    determining first delay domain channel information based on the second reference signal;
    determining second delay domain channel information, wherein the second delay domain channel information is obtained based on the first channel delay domain sparsity information and the first delay domain channel information; and
    determining channel state information based on the first space domain statistical covariance matrix of the channel and the second delay domain channel information.

11. The method according to any one of claims 3 to 9, wherein the first measurement information comprises the first channel delay domain sparsity information; and
    the method further comprises:

determining first delay domain channel information based on the second reference signal;

determining second delay domain channel information, wherein the second delay domain channel information is obtained based on the first channel delay domain sparsity information and the first delay domain channel information;

determining a second space domain statistical covariance matrix, wherein the second space domain statistical covariance matrix is obtained based on the second reference signal; and

determining channel state information based on the second space domain statistical covariance matrix and the second delay domain channel information.

12. The method according to any one of claims 3 to 9, wherein the first measurement information comprises the first space domain statistical covariance matrix of the channel; and
the method further comprises:

determining first delay domain channel information based on the second reference signal;

determining second channel delay domain sparsity information, wherein the second channel delay domain sparsity information is obtained based on the second reference signal;

determining second delay domain channel information, wherein the second delay domain channel information is obtained based on the second channel delay domain sparsity information and the first delay domain channel information; and

determining channel state information based on the first space domain statistical covariance matrix of the channel and the second delay domain channel information.

13. The method according to claim 10 or 11, wherein the first channel delay domain sparsity information is channel delay domain sparsity information at an RB granularity; and
the determining second delay domain channel information further comprises:

determining channel delay domain sparsity information at a resource element RE granularity based on the channel delay domain sparsity information at the RB granularity; and

determining the second delay domain channel information based on the channel delay domain sparsity information at the RE granularity and the first delay domain channel information.

14. A channel state information determining method, wherein the method is applied to a terminal device and comprises:

receiving a first reference signal from an access network device;

determining first measurement information based on the first reference signal;

sending the first measurement information to the access network device; and

sending a second reference signal to the access network device, wherein the first measurement information and the second reference signal are used to determine channel state information.

15. The method according to claim 14, wherein the first measurement information comprises at least one of first information and second information, the first information indicates channel delay domain information, and the second information indicates space domain statistics information of a channel.

16. The method according to claim 15, wherein the channel delay domain information comprises first channel delay domain sparsity information, and the space domain statistics information of the channel comprises a first space domain statistical covariance matrix of the channel.

17. The method according to claim 16, wherein the first channel delay domain sparsity information comprises a first bitmap, the first bitmap indicates a location of a delay path, and a length of the first bitmap is a quantity of RBs; and
that the space domain statistics information of the channel comprises a first space domain statistical covariance matrix of the channel comprises:

the space domain statistics information of the channel comprises a first space domain statistical covariance matrix of each delay path of the channel.

18. The method according to claim 16 or 17, wherein the method further comprises:
receiving third information from the access network device, wherein the third information is for division into a first-type delay path and a second-type delay path in channel delay domain, and energy of each delay path in the first-type delay path is greater than energy of each delay path in the second-type delay path.

19. The method according to claim 18, wherein the first channel delay domain sparsity information comprises a second bitmap, the second bitmap indicates a location of the second-type delay path, and a length of the second bitmap is the quantity of resource blocks RBs; and

that the space domain statistics information of the channel comprises a first space domain statistical covariance matrix of the channel comprises:

the space domain statistics information of the channel comprises a first space domain statistical covariance matrix of the second-type delay path of the channel.

20. The method according to any one of claims 16 to 19, wherein the second information indicates an eigenvalue and an eigenvector matrix that correspond to the first space domain statistical covariance matrix of each delay path or the second-type delay path of the channel.

21. The method according to any one of claims 16 to 19, wherein the second information indicates a base combination coefficient matrix corresponding to the first space domain statistical covariance matrix of each delay path or the second-type delay path of the channel.

22. The method according to any one of claims 14 to 21, wherein the first reference signal comprises a channel state information reference signal CSI-RS, and the second reference signal comprises a sounding reference signal SRS.

23. A communication apparatus, wherein the apparatus is an access network device and comprises:

a transceiver unit, configured to send a first reference signal to a terminal device, wherein

the transceiver unit is further configured to receive first measurement information from the terminal device, wherein the first measurement information is determined based on the first reference signal; and

the transceiver unit is further configured to receive a second reference signal from the terminal device; and

a processing unit, configured to determine channel state information based on the first measurement information and the second reference signal.

24. The apparatus according to claim 23, wherein the first measurement information comprises at least one of first information and second information, the first information indicates channel delay domain information, and the second information indicates space domain statistics information of a channel.

25. The apparatus according to claim 24, wherein the channel delay domain information comprises first channel delay domain sparsity information, and the space domain statistics information of the channel comprises a first space domain statistical covariance matrix of the channel.

26. The apparatus according to claim 25, wherein the first channel delay domain sparsity information comprises a first bitmap, the first bitmap indicates a location of a delay path, and a length of the first bitmap is a quantity of RBs; and

that the space domain statistics information of the channel comprises a first space domain statistical covariance matrix of the channel comprises:

the space domain statistics information of the channel comprises a first space domain statistical covariance matrix of each delay path of the channel.

27. The apparatus according to claim 25 or 26, wherein the transceiver unit is further configured to:

send third information to the terminal device, wherein the third information is for division into a first-type delay path and a second-type delay path in channel delay domain, and energy of each delay path in the first-type delay path is greater than energy of each delay path in the second-type delay path.

28. The method according to claim 27, wherein the first channel delay domain sparsity information comprises a second bitmap, the second bitmap indicates a location of the second-type delay path, and a length of the second bitmap is the quantity of resource blocks RBs; and

that the space domain statistics information of the channel comprises a first space domain statistical covariance matrix of the channel comprises:

the space domain statistics information of the channel comprises a first space domain statistical covariance matrix of the second-type delay path of the channel.

29. The apparatus according to any one of claims 25 to 28, wherein the second information indicates an eigenvalue and an eigenvector matrix that correspond to the first space domain statistical covariance matrix of each delay path or the second-type delay path of the channel.

30. The apparatus according to any one of claims 25 to 28, wherein the second information indicates a base combination coefficient matrix corresponding to the first space domain statistical covariance matrix of each delay path or the second-type delay path of the channel.

31. The apparatus according to any one of claims 23 to 30, wherein the first reference signal comprises a channel state information reference signal CSI-RS, and the second reference signal comprises a sounding reference signal SRS.

32. The apparatus according to any one of claims 25 to 31, wherein the first measurement information comprises the first channel delay domain sparsity information and the first space domain statistical covariance matrix of the channel;

the processing unit is configured to determine first delay domain channel information based on the second reference signal;
the processing unit is further configured to determine second delay domain channel information, wherein the second delay domain channel information is obtained based on the first channel delay domain sparsity information and the first delay domain channel information; and
the processing unit is further configured to determine channel state information based on the first space domain statistical covariance matrix of the channel and the second delay domain channel information.

33. The apparatus according to any one of claims 25 to 31, wherein the first measurement information comprises the first channel delay domain sparsity information;

the processing unit is further configured to determine first delay domain channel information based on the second reference signal;
the processing unit is further configured to determine second delay domain channel information, wherein the second delay domain channel information is obtained based on the first channel delay domain sparsity information and the first delay domain channel information;
the processing unit is further configured to determine a second space domain statistical covariance matrix, wherein the second space domain statistical covariance matrix is obtained based on the second reference signal; and
the processing unit is further configured to determine channel state information based on the second space domain statistical covariance matrix and the second delay domain channel information.

34. The apparatus according to any one of claims 25 to 31, wherein the first measurement information comprises the first space domain statistical covariance matrix of the channel;

the processing unit is further configured to determine first delay domain channel information based on the second reference signal;
the processing unit is further configured to determine second channel delay domain sparsity information, wherein the second channel delay domain sparsity information is obtained based on the second reference signal;
the processing unit is further configured to determine second delay domain channel information, wherein the second delay domain channel information is obtained based on the second channel delay domain sparsity information and the first delay domain channel information; and
the processing unit is further configured to determine channel state information based on the first space domain statistical covariance matrix of the channel and the second delay domain channel information.

35. The apparatus according to claim 32 or 33, wherein the first channel delay domain sparsity information is channel delay domain sparsity information at an RB granularity; and
the processing unit is further configured to:

determine channel delay domain sparsity information at a resource element RE granularity based on the channel delay domain sparsity information at the RB granularity; and
determine the second delay domain channel information based on the channel delay domain sparsity information at the RE granularity and the first delay domain channel information.

36. A communication apparatus, wherein the apparatus is a terminal device and comprises:

   a transceiver unit, configured to receive a first reference signal from an access network device; and
   a processing unit, configured to determine first measurement information based on the first reference signal, wherein
   the transceiver unit is further configured to send the first measurement information to the access network device; and
   the transceiver unit is further configured to send a second reference signal to the access network device, wherein the first measurement information and the second reference signal are used to determine channel state information.

37. The apparatus according to claim 36, wherein the first measurement information comprises at least one of first information and second information, the first information indicates channel delay domain information, and the second information indicates space domain statistics information of a channel.

38. The apparatus according to claim 37, wherein the channel delay domain information comprises first channel delay domain sparsity information, and the space domain statistics information of the channel comprises a first space domain statistical covariance matrix of the channel.

39. The apparatus according to claim 38, wherein the first channel delay domain sparsity information comprises a first bitmap, the first bitmap indicates a location of a delay path, and a length of the first bitmap is a quantity of RBs; and that the space domain statistics information of the channel comprises a first space domain statistical covariance matrix of the channel comprises:
   the space domain statistics information of the channel comprises a first space domain statistical covariance matrix of each delay path of the channel.

40. The apparatus according to claim 38 or 39, wherein the transceiver unit is further configured to:
   receive third information from the access network device, wherein the third information is for division into a first-type delay path and a second-type delay path in channel delay domain, and energy of each delay path in the first-type delay path is greater than energy of each delay path in the second-type delay path.

41. The method according to claim 40, wherein the first channel delay domain sparsity information comprises a second bitmap, the second bitmap indicates a location of the second-type delay path, and a length of the second bitmap is the quantity of resource blocks RBs; and
   that the space domain statistics information of the channel comprises a first space domain statistical covariance matrix of the channel comprises:
   the space domain statistics information of the channel comprises a first space domain statistical covariance matrix of the second-type delay path of the channel.

42. The apparatus according to any one of claims 38 to 41, wherein the second information indicates an eigenvalue and an eigenvector matrix that correspond to the first space domain statistical covariance matrix of each delay path or the second-type delay path of the channel.

43. The apparatus according to any one of claims 38 to 41, wherein the second information indicates a base combination coefficient matrix corresponding to the first space domain statistical covariance matrix of each delay path or the second-type delay path of the channel.

44. The apparatus according to any one of claims 36 to 43, wherein the first reference signal comprises a channel state information reference signal CSI-RS, and the second reference signal comprises a sounding reference signal SRS.

45. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to enable, by using a logic circuit or by executing code instructions, the communication apparatus to implement the method according to any one of claims 1 to 13 or claims 14 to 22.

46. A computer-readable storage medium, wherein the storage medium stores a computer program or instructions, and when the computer program or the instructions are executed by a computer, the method according to any one of claims 1 to 13 or claims 14 to 22 is implemented.

47. A computer program product, comprising computer program code, wherein when the computer program code is run on a computer, the method according to any one of claims 1 to 13 or claims 14 to 22 is implemented.

48. A chip, wherein the chip is coupled to a memory, and is configured to read and execute program instructions stored in the memory, to implement the method according to any one of claims 1 to 13 or claims 14 to 22.

FIG. 1

1: The base station sends channel
estimation configuration information

2: The UE sends a sounding reference signal
SRS based on the configuration information

3: The base station measures the SRS, performs
channel estimation, and sends data based on
estimated channel state information CSI

FIG. 2

Base station | UE

1: The base station sends channel measurement configuration information

2: The base station sends a channel state information reference signal CSI-RS

3: The UE sends CSI based on a measurement result of the CSI-RS

4: The base station sends data based on the CSI fed back by the UE

FIG. 3

Access network device | Terminal device

S401: Send a first reference signal

S402: Determine first measurement information based on the first reference signal

S403: Send the first measurement information

S404: Send a second reference signal

S405: Determine channel state information based on the first measurement information and the second reference signal

FIG. 4

FIG. 5

FIG. 6

FIG. 7

FIG. 8

## INTERNATIONAL SEARCH REPORT

| International application No. |
|---|
| **PCT/CN2023/103739** |

---

**A. CLASSIFICATION OF SUBJECT MATTER**

H04L25/02(2006.01)i; H04L1/00(2006.01)i; H04W24/10(2009.01)i; H04B7/06(2006.01)i

According to International Patent Classification (IPC) or to both national classification and IPC

**B. FIELDS SEARCHED**

Minimum documentation searched (classification system followed by classification symbols)

IPC:H04L H04W H04B

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ENTXT; CNKI: 信道状态, 信道状态信息, 参考信号, 空域, 时延, 时延域, 时延径, 稀疏, 协方差, 终端, 接入网, 测量信息, CSI, SRS, CSI-RS

**C. DOCUMENTS CONSIDERED TO BE RELEVANT**

| Category* | Citation of document, with indication, where appropriate, of the relevant passages | Relevant to claim No. |
|---|---|---|
| X | CN 107733549 A (HUAWEI TECHNOLOGIES CO., LTD.) 23 February 2018 (2018-02-23) description, paragraphs [0229]-[0334], and figures 4-7 | 1, 9, 14, 22, 23, 31, 36, 44-48 |
| Y | CN 107733549 A (HUAWEI TECHNOLOGIES CO., LTD.) 23 February 2018 (2018-02-23) description, paragraphs [0229]-[0334], and figures 4-7 | 2-8, 10-13, 15-21, 24-30, 32-35, 37-43, 44-48 |
| Y | CN 114598365 A (VIVO COMMUNICATION TECHNOLOGY CO., LTD.) 07 June 2022 (2022-06-07) description, paragraphs [0035]-[0228], and figures 2-9 | 2-8, 10-13, 15-21, 24-30, 32-35, 37-43, 44-48 |
| A | CN 111567081 A (SAMSUNG ELECTRONICS CO., LTD.) 21 August 2020 (2020-08-21) entire document | 1-48 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **23 August 2023** | **16 September 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/103739**

| Patent document cited in search report | | | Publication date (day/month/year) | Patent family member(s) | | | Publication date (day/month/year) |
|---|---|---|---|---|---|---|---|
| CN | 107733549 | A | 23 February 2018 | WO | 2018028540 | A1 | 15 February 2018 |
| | | | | EP | 3493438 | A1 | 05 June 2019 |
| | | | | EP | 3493438 | A4 | 11 March 2020 |
| | | | | EP | 3493438 | B1 | 15 June 2022 |
| | | | | US | 2019166514 | A1 | 30 May 2019 |
| | | | | US | 10893426 | B2 | 12 January 2021 |
| CN | 114598365 | A | 07 June 2022 | | None | | |
| CN | 111567081 | A | 21 August 2020 | KR | 20200090849 | A | 29 July 2020 |
| | | | | WO | 2019124983 | A1 | 27 June 2019 |
| | | | | EP | 3711344 | A1 | 23 September 2020 |
| | | | | EP | 3711344 | A4 | 13 January 2021 |
| | | | | US | 2019190582 | A1 | 20 June 2019 |
| | | | | US | 11050478 | B2 | 29 June 2021 |

Form PCT/ISA/210 (patent family annex) (July 2022)

**REFERENCES CITED IN THE DESCRIPTION**

**Patent documents cited in the description**

- CN 202210916569